# EUROPEAN PATENT APPLICATION

(11) **EP 4 564 883 A1**
(43) Date of publication of application: **04.06.2025**
(21) Application number: 23851475.6
(22) Date of filing: 30.06.2023
(51) Int. Cl.: H04W 24/02

(54) **MEASUREMENT METHOD AND APPARATUS, AND SCHEDULING METHOD AND APPARATUS**

(30) Priority: 08.08.2022 CN 202210945494
(71) Applicant: Huawei Technologies Co., Ltd., Shenzhen, Guangdong 518129 (CN)
(72) Inventor: SHEN, Zhongyi, Shenzhen, Guangdong 518129 (CN); HAN, Jing, Shenzhen, Guangdong 518129 (CN); ZHANG, Li, Shenzhen, Guangdong 518129 (CN); ZHANG, Jiayin, Shenzhen, Guangdong 518129 (CN)
(74) Representative: Maiwald GmbH
(86) International application number: PCT/CN2023/104766
(87) International publication number: WO 2024/032248

(57) **Abstract**

A measurement method, a scheduling method, and an apparatus are provided, and may be used in a scenario of received signal strength indicator RSSI measurement or channel occupancy measurement CO. The method includes: A first terminal device determines a first time-domain symbol group, and determines a measurement result of RSSI measurement and/or a measurement result of CO measurement in the first time-domain symbol group. The first time-domain symbol group includes a time-domain symbol in an RMTC window other than a second time-domain symbol group, and the second time-domain symbol group includes first N time-domain symbols and/or last M time-domain symbols in the RMTC window. A network device determines, according to a scheduling rule, a transmission resource that can be used for a downlink signal to the first terminal device. The scheduling rule includes: disallowing the network device to send a downlink signal to the first terminal device on the second time-domain symbol group on a first carrier. Terminal device-based processing may reduce impact of beam switching on a measurement result, thereby reducing a measurement error. Network device-based processing may avoid a downlink transmission failure caused by beam switching, thereby reducing a waste of resources.

## Description

This application claims priority to Chinese Patent Application No. 202210945494.5, filed with the China National Intellectual Property Administration on August 8, 2022 and entitled "MEASUREMENT METHOD, SCHEDULING METHOD, AND APPARATUS", which is incorporated herein by reference in its entirety.

### TECHNICAL FIELD

Embodiments of this application relate to the communication field, and in particular, to a measurement method, a scheduling method, and an apparatus.

### BACKGROUND

In a wireless communication system, received signal strength indicator (received signal strength indicator, RSSI) measurement and channel occupancy (channel occupancy, CO) measurement are defined. An RSSI represents an average power value of each orthogonal frequency division multiplexing (orthogonal frequency division multiplexing, OFDM) symbol in measurement bandwidth. The CO measurement is used to determine a proportion of OFDM symbols whose power exceeds a threshold in the measurement bandwidth.

In a low-frequency band, if RSSI/CO measurement bandwidth is within an active bandwidth part (bandwidth part, BWP) of a serving cell of a terminal device, the terminal device may simultaneously perform RSSI/CO measurement and downlink receiving.

However, in a high-frequency band, because a frequency is high, downlink receiving and RSSI/CO measurement by the terminal device need to be performed in a specific beam direction. In this case, some implementations of the RSSI/CO measurement in the low-frequency band may no longer be applicable.

### SUMMARY

This application provides a measurement method, a scheduling method, and an apparatus, so that impact of beam switching on a measurement result can be reduced, thereby reducing a measurement error.

According to a first aspect, a measurement method is provided. The method may be performed by a first terminal device, may be performed by a component of the first terminal device, for example, a processor, a chip, or a chip system of the first terminal device, or may be implemented by a logical module or software that can implement all or some functions of the first terminal device. The method includes: determining a first time-domain symbol group, and determining a measurement result of RSSI measurement and/or a measurement result of channel occupancy CO measurement in the first time-domain symbol group. The first time-domain symbol group includes a time-domain symbol in an RMTC window other than a second time-domain symbol group. The second time-domain symbol group includes first N time-domain symbols and/or last M time-domain symbols in the RMTC window, and N and M are positive integers.

Based on this solution, when determining the measurement result of the RSSI measurement and/or the measurement result of the CO measurement, the terminal device excludes the first N time-domain symbols and/or the last M time-domain symbols in the RMTC window. When beam switching is performed on the first N time-domain symbols and/or the last M time-domain symbols, because the first N time-domain symbols and/or the last M time-domain symbols do not participate in calculation of the measurement result, impact of beam switching on the measurement result can be reduced, thereby reducing a measurement error.

In a possible design, if a first subcarrier spacing is greater than or equal to a first threshold, the second time-domain symbol group includes the first N time-domain symbols and/or the last M time-domain symbols in the RMTC window. The first subcarrier spacing is a subcarrier spacing of an active bandwidth part BWP of a first carrier, and the first carrier is a carrier on which measurement bandwidth of the RSSI measurement or the CO measurement is located; or the first subcarrier spacing is a subcarrier spacing of the RSSI measurement or the CO measurement.

Based on the possible design, when a subcarrier spacing is large, a length of a time-domain symbol is small. In this case, duration occupied by beam switching on a time-domain symbol cannot be ignored. A time-domain symbol, in the RMTC window, on which beam switching may occur is excluded, so that the first N time-domain symbols and/or the last M time-domain symbols do not participate in the calculation of the measurement result, and the impact of beam switching on the measurement result can be reduced, thereby reducing the measurement error.

In a possible design, if an RSSI measurement resource and a first downlink signal are not quasi co-located QCL-ed, the second time-domain symbol group includes the first N time-domain symbols in the RMTC window, where the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or if the RSSI measurement resource and a second downlink signal are not QCL-ed, the second time-domain symbol group includes the last M time-domain symbols in the RMTC window, where the second downlink signal is a downlink signal on a 1^{st} time-domain symbol after the RMTC window, or the second downlink signal is a downlink signal that is after the RMTC window and that is closest to the RMTC window.

Based on the possible design, when the RSSI measurement resource and the first downlink signal are not QCL-ed, after receiving the first downlink signal, the first terminal device needs to perform beam switching to perform RSSI/CO measurement. In this case, if beam switching is performed on the first N time-domain symbols in the RMTC window, a measurement result for the first N time-domain symbols is affected. In this case, the first N time-domain symbols in the RMTC window may be excluded from the first time-domain symbol group, to reduce impact of beam switching on the measurement result, and reduce the measurement error.

When the RSSI measurement resource and the second downlink signal are not QCL-ed, after the RSSI/CO measurement, the first terminal device needs to perform beam switching to receive the second downlink signal. In this case, if beam switching is performed on the last M time-domain symbols in the RMTC window, a measurement result for the last M time-domain symbols is affected. In this case, the last M time-domain symbols in the RMTC window may be excluded from the first time-domain symbol group, to reduce impact of beam switching on the measurement result, and reduce the measurement error.

In a possible design, the method further includes: sending capability information to a network device. The capability information indicates whether the first terminal device supports simultaneously performing RSSI/CO measurement and downlink receiving when an RSSI measurement resource and a downlink signal are QCL-ed.

According to a second aspect, a scheduling method is provided. The method may be performed by a network device, may be performed by a component of the network device, for example, a processor, a chip, or a chip system of the network device, or may be implemented by a logical module or software that can implement all or some functions of the network device. The method includes: determining an RMTC configuration for a first terminal device, where the RMTC configuration is used for RSSI measurement and/or channel occupancy CO measurement; and determining, according to a scheduling rule, a transmission resource that can be used for a downlink signal to the first terminal device, where the scheduling rule includes: disallowing a network device to send a downlink signal to the first terminal device on a second time-domain symbol group on a first carrier. The first carrier is a carrier on which measurement bandwidth of the RSSI measurement and/or measurement bandwidth of the CO measurement are/is located; and the second time-domain symbol group includes first N time-domain symbols and/or last M time-domain symbols in an RMTC window of the first terminal device, and N and M are positive integers.

In a scenario in which the first terminal device may perform beam switching on the second time-domain symbol group, if the network device sends a downlink signal to the first terminal device on the second time-domain symbol group on the first carrier, the first terminal device may not be incapable of performing downlink receiving. Consequently, a transmission failure occurs, causing a waste of resources. Based on this solution, the network device is disallowed to send a downlink signal to the first terminal device on the second time-domain symbol group on the first carrier. Therefore, the network device may not send a downlink signal to the first terminal device on the second time-domain symbol group on the first carrier, so that the waste of resources is reduced.

In a possible design, if a first subcarrier spacing is greater than or equal to a first threshold, the second time-domain symbol group includes the first N time-domain symbols and/or the last M time-domain symbols in the RMTC window. The first subcarrier spacing is a subcarrier spacing of an active bandwidth part BWP of the first carrier, or the first subcarrier spacing is a subcarrier spacing of the RSSI measurement or the CO measurement.

In a possible design, if an RSSI measurement resource and a first downlink signal are not quasi co-located QCL-ed, the second time-domain symbol group includes the first N time-domain symbols in the RMTC window, where the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or if the RSSI measurement resource and a second downlink signal are not QCL-ed, the second time-domain symbol group includes the last M time-domain symbols in the RMTC window, where the second downlink signal is a downlink signal on a 1^{st} time-domain symbol after the RMTC window, or the second downlink signal is a downlink signal that is after the RMTC window and that is closest to the RMTC window.

In a possible design, the scheduling rule further includes: disallowing the network device to send, to the first terminal device on a first time-domain symbol group on the first carrier, a downlink signal that is not QCL-ed with the RSSI measurement resource. The first time-domain symbol group includes a time-domain symbol in the RMTC window other than the second time-domain symbol group.

In a possible design, the scheduling rule further includes: allowing the network device to send, to the first terminal device on the first time-domain symbol group on the first carrier, a downlink signal that is QCL-ed with the RSSI measurement resource. The first time-domain symbol group includes a time-domain symbol in the RMTC window other than the second time-domain symbol group.

Based on the two possible designs, the network device can send, to the first terminal device on the first time-domain symbol group on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

In a possible design, the scheduling rule further includes: disallowing the network device to send a downlink signal to the first terminal device on a third time-domain symbol group on a second carrier. The second carrier and the first carrier are in a same frequency band, and a time-domain symbol in the third time-domain symbol group partially or fully overlaps time-domain symbols in the second time-domain symbol group.

Based on the possible design, the network device is disallowed to send a downlink signal to the first terminal device on the third time-domain symbol group on the second carrier. Therefore, the network device may not send a downlink signal to the first terminal device on the third time-domain symbol group on the second carrier, so that the waste of resources is reduced.

In a possible design, the scheduling rule further includes: disallowing the network device to send, to the first terminal device on a fourth time-domain symbol group on the second carrier, a downlink signal that is not QCL-ed with the RSSI measurement resource. A time-domain location of the fourth time-domain symbol group includes a time-domain location in time-domain locations of the RMTC window other than a time-domain location of the third time-domain symbol group.

In a possible design, the scheduling rule further includes: allowing the network device to send, to the first terminal device on a fourth time-domain symbol group on the second carrier, a downlink signal that is QCL-ed with the RSSI measurement resource. A time-domain location of the fourth time-domain symbol group includes a time-domain location in time-domain locations of the RMTC window other than a time-domain location of the third time-domain symbol group.

Based on the two possible designs, the network device can send, to the first terminal device on the fourth time-domain symbol group on the second carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

In a possible design, the method further includes: receiving capability information from the first terminal device. The capability information indicates whether the first terminal device supports simultaneously performing RSSI/CO measurement and downlink receiving when an RSSI measurement resource and a downlink signal are QCL-ed.

According to a third aspect, a scheduling method is provided. The method may be performed by a network device, may be performed by a component of the network device, for example, a processor, a chip, or a chip system of the network device, or may be implemented by a logical module or software that can implement all or some functions of the network device. The method includes: determining an RMTC configuration for a first terminal device, where the RMTC configuration is used for RSSI measurement and/or channel occupancy CO measurement; and determining, according to a scheduling rule, a transmission resource that can be used for a downlink signal to the first terminal device, where the scheduling rule includes: disallowing the network device to send, to the first terminal device on a first time-domain symbol group on a first carrier, a downlink signal that is not QCL-ed with an RSSI measurement resource. The first time-domain symbol group includes a time-domain symbol in an RMTC window other than a second time-domain symbol group. The second time-domain symbol group includes first N time-domain symbols and/or last M time-domain symbols in the RMTC window of the first terminal device, and N and M are positive integers.

Based on this design, the network device can send, to the first terminal device on the first time-domain symbol group on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

According to a fourth aspect, a scheduling method is provided. The method may be performed by a network device, may be performed by a component of the network device, for example, a processor, a chip, or a chip system of the network device, or may be implemented by a logical module or software that can implement all or some functions of the network device. The method includes: determining an RMTC configuration for a first terminal device, where the RMTC configuration is used for RSSI measurement and/or channel occupancy CO measurement; and determining, according to a scheduling rule, a transmission resource that can be used for a downlink signal to the first terminal device, where the scheduling rule includes: disallowing a network device to send a downlink signal to the first terminal device on a fifth time-domain symbol group on a first carrier. The first carrier is a carrier on which measurement bandwidth of the RSSI measurement and/or measurement bandwidth of the CO measurement are/is located; and the fifth time-domain symbol group includes X time-domain symbols before an RMTC window of the first terminal device and/or Y time-domain symbols after the RMTC window, and X and Y are positive integers.

When beam switching is performed on the X time-domain symbols before the RMTC window, the first terminal device may not be incapable of performing downlink receiving on the X time-domain symbols. In this case, if the network device still sends a downlink signal to the first terminal device on the X time-domain symbols on the first carrier, a transmission failure occurs because the first terminal device cannot perform downlink receiving, causing a waste of resources. Based on this solution, the network device is disallowed to send a downlink signal to the first terminal device on the X time-domain symbols on the first carrier, so that a waste of resources caused because the network device sends a downlink signal but the first terminal device cannot receive the downlink signal can be reduced.

Similarly, when beam switching is performed on the Y time-domain symbols after the RMTC window, based on this solution, the network device is disallowed to send a downlink signal to the first terminal device on the Y time-domain symbols on the first carrier, so that a waste of resources caused because the network device sends a downlink signal but the first terminal device cannot receive the downlink signal can be reduced.

In a possible design, if a first subcarrier spacing is greater than or equal to a first threshold, the fifth time-domain symbol group includes the X time-domain symbols before the RMTC window and/or the Y time-domain symbols after the RMTC window. The first subcarrier spacing is a subcarrier spacing of an active bandwidth part BWP of the first carrier, or the first subcarrier spacing is a subcarrier spacing of the RSSI measurement or the CO measurement.

In a possible design, if an RSSI measurement resource and a third downlink signal are not quasi co-located QCL-ed, the fifth time-domain symbol group includes X time-domain symbols before the RMTC window, where the third downlink signal is a downlink signal on the X time-domain symbols, or the third downlink signal is a downlink signal that is before the X time-domain symbols and that is closest to the X time-domain symbols; and the RSSI measurement resource is used for the RSSI measurement or the CO measurement; and if the RSSI measurement resource and a fourth downlink signal are not QCL-ed, the fifth time-domain symbol group includes Y time-domain symbols after the RMTC window, where the fourth downlink signal is a downlink signal on the Y time-domain symbols, or the fourth downlink signal is a downlink signal that is after the Y time-domain symbols and that is closest to the Y time-domain symbols.

In a possible design, the scheduling rule further includes: disallowing the network device to send, to the first terminal device in the RMTC window on the first carrier, a downlink signal that is not QCL-ed with the RSSI measurement resource.

In a possible design, the scheduling rule further includes: allowing the network device to send, to the first terminal device in the RMTC window on the first carrier, a downlink signal that is QCL-ed with the RSSI measurement resource.

Based on the two possible designs, the network device can send, to the first terminal device in the RMTC window on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

In a possible design, the scheduling rule further includes: disallowing the network device to send a downlink signal to the first terminal device on a sixth time-domain symbol group on a second carrier. The second carrier and the first carrier are in a same frequency band, and a time-domain symbol in the sixth time-domain symbol group partially or fully overlaps time-domain symbols in the fifth time-domain symbol group.

In a possible design, the scheduling rule further includes: disallowing the network device to send, to the first terminal device on a seventh time-domain symbol group on the second carrier, a downlink signal that is not QCL-ed with the RSSI measurement resource. A time-domain location of the seventh time-domain symbol group includes a time-domain location in a time-domain location of the RMTC window other than a time-domain location of the sixth time-domain symbol group.

In a possible design, the scheduling rule further includes: allowing the network device to send, to the first terminal device on a seventh time-domain symbol group on the second carrier, a downlink signal that is QCL-ed with the RSSI measurement resource. A time-domain location of the seventh time-domain symbol group includes a time-domain location in a time-domain location of the RMTC window other than a time-domain location of the sixth time-domain symbol group.

In a possible design, the method further includes: receiving capability information from the first terminal device. The capability information indicates whether the first terminal device supports simultaneously performing RSSI/CO measurement and downlink receiving when an RSSI measurement resource and a downlink signal are QCL-ed.

According to a fifth aspect, a scheduling method is provided. The method may be performed by a network device, may be performed by a component of the network device, for example, a processor, a chip, or a chip system of the network device, or may be implemented by a logical module or software that can implement all or some functions of the network device. The method includes: determining an RMTC configuration for a first terminal device, where the RMTC configuration is used for RSSI measurement and/or channel occupancy CO measurement; and determining, according to a scheduling rule, a transmission resource that can be used for a downlink signal to the first terminal device, where the scheduling rule includes: disallowing the network device to send, to the first terminal device in an RMTC window on a first carrier, a downlink signal that is not QCL-ed with an RSSI measurement resource. The first carrier is a carrier on which measurement bandwidth of RSSI measurement and/or measurement bandwidth of CO measurement are/is located.

Based on this design, the network device can send, to the first terminal device in the RMTC window on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

According to a sixth aspect, a communication method is provided. The method may be performed by a first terminal device, may be performed by a component of the first terminal device, for example, a processor, a chip, or a chip system of the first terminal device, or may be implemented by a logical module or software that can implement all or some functions of the first terminal device. The method includes: determining capability information; and sending the capability information to a network device. The capability information indicates whether a first terminal device supports simultaneously performing RSSI/channel occupancy CO measurement and downlink receiving when a received signal strength indicator RSSI measurement resource and a downlink signal are quasi co-located QCL-ed.

Based on this solution, the first terminal device reports the capability information of the first terminal device to the network device, so that the network device performs scheduling more accurately based on the capability information, to improve scheduling efficiency.

In a possible design, the capability information indicates that the first terminal device does not support simultaneously performing RSSI/CO measurement and downlink receiving when an RSSI measurement resource and a downlink signal are QCL-ed; and the method further includes: When the network device configures the first terminal device to receive the downlink signal while performing RSSI/CO measurement on the RSSI measurement resource, the first terminal device performs RSSI/CO measurement, and does not receive the downlink signal.

According to a seventh aspect, a communication method is provided. The method may be performed by a network device, may be performed by a component of the network device, for example, a processor, a chip, or a chip system of the network device, or may be implemented by a logical module or software that can implement all or some functions of the network device. The method includes: receiving capability information from a first terminal device, and determining, based on the capability information, a transmission resource that can be used for a downlink signal to the first terminal device. The capability information indicates whether a first terminal device supports simultaneously performing RSSI/channel occupancy CO measurement and downlink receiving when a received signal strength indicator RSSI measurement resource and a downlink signal are quasi co-located QCL-ed. For technical effects brought by the seventh aspect, refer to the technical effects brought by the sixth aspect. Details are not described herein again.

In a possible design, if the capability information indicates that the first terminal device does not support simultaneously performing RSSI/CO measurement and downlink receiving when an RSSI measurement resource and a downlink signal are QCL-ed, the transmission resource that can be used for a downlink signal to the first terminal device does not include an RMTC window on a first carrier.

According to an eighth aspect, a measurement method is provided. The method may be performed by a first terminal device, may be performed by a component of the first terminal device, for example, a processor, a chip, or a chip system of the first terminal device, or may be implemented by a logical module or software that can implement all or some functions of the first terminal device. The method includes: determining an eighth time-domain symbol group, and determining a measurement result of received signal strength indicator RSSI measurement and/or a measurement result of channel occupancy CO measurement on the eighth time-domain symbol group.

If a length of an RSSI measurement timing configuration RMTC window is greater than or equal to a second threshold, the eighth time-domain symbol group includes a time-domain symbol in the RMTC window other than a ninth time-domain symbol group, the ninth time-domain symbol group includes first N time-domain symbols and/or last M time-domain symbols in the RMTC window, and N and M are positive integers. Alternatively, if a length of the RMTC window is less than a second threshold, the eighth time-domain symbol group includes all time-domain symbols in the RMTC window.

Based on this solution, the terminal device may choose, based on the length of the RMTC window, to perform beam switching in the RMTC window or outside the RMTC window. When the length of the RMTC window is long, beam switching is performed in the RMTC window, so that downlink transmission can be performed before and after the RMTC window, to improve resource utilization and a network throughput. When the length of the RMTC window is short, beam switching is performed outside the RMTC window, to reduce impact of beam switching on RSSI/CO measurement, and improve accuracy of the measurement result.

In a possible design, the length of the RMTC window is a total quantity of time-domain symbols in the RMTC window, or the length of the RMTC window is duration occupied by the RMTC window.

According to a ninth aspect, a scheduling method is provided. The method may be performed by a network device, may be performed by a component of the network device, for example, a processor, a chip, or a chip system of the network device, or may be implemented by a logical module or software that can implement all or some functions of the network device. The method includes: determining an RMTC configuration for a first terminal device, where the RMTC configuration is used for RSSI measurement and/or channel occupancy CO measurement; and determining, according to a scheduling rule, a transmission resource that can be used for a downlink signal to the first terminal device. The scheduling rule includes: disallowing the network device to send a downlink signal to the first terminal device on a tenth time-domain symbol group on a first carrier.

If a length of an RMTC window is greater than or equal to a second threshold, the tenth time-domain symbol group includes first N time-domain symbols and/or last M time-domain symbols in the RMTC window, and N and M are positive integers. Alternatively, if a length of an RMTC window is less than a second threshold, the tenth time-domain symbol group includes X time-domain symbols before the RMTC window and/or Y time-domain symbols after the RMTC window, and X and Y are positive integers.

Based on this solution, the network device determines, based on the length of the RMTC window, transmission resources on which a downlink signal is disallowed to be sent to the first terminal device. In a scenario in which beam switching is performed on these transmission resources, the network device does not send a downlink signal to the first terminal device on these transmission resources, to reduce a waste of resources.

In a possible design, the length of the RMTC window is a total quantity of time-domain symbols in the RMTC window, or the length of the RMTC window is duration occupied by the RMTC window.

According to a tenth aspect, a communication apparatus is provided, to implement the foregoing methods. The communication apparatus may be the first terminal device in the first aspect, the sixth aspect, or the eighth aspect, or an apparatus included in the first terminal device, for example, a chip or a chip system. Alternatively, the communication apparatus may be the network device in the second aspect to the fifth aspect, the seventh aspect, or the ninth aspect, or an apparatus included in the network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to the functions.

In some possible designs, the communication apparatus may include a processing module. Further, the communication apparatus may further include a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver machine, a transceiver, or a communication interface.

According to an eleventh aspect, a communication apparatus is provided, including a processor and a memory. The memory is configured to store computer instructions. When the processor executes the instructions, the communication apparatus is enabled to perform the method according to any one of the foregoing aspects. The communication apparatus may be the first terminal device in the first aspect, the sixth aspect, or the eighth aspect, or an apparatus included in the first terminal device, for example, a chip or a chip system. Alternatively, the communication apparatus may be the network device in the second aspect to the fifth aspect, the seventh aspect, or the ninth aspect, or an apparatus included in the network device, for example, a chip or a chip system.

According to a twelfth aspect, a communication apparatus is provided, including a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the first terminal device in the first aspect, the sixth aspect, or the eighth aspect, or an apparatus included in the first terminal device, for example, a chip or a chip system. Alternatively, the communication apparatus may be the network device in the second aspect to the fifth aspect, the seventh aspect, or the ninth aspect, or an apparatus included in the network device, for example, a chip or a chip system.

According to a thirteenth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first terminal device in the first aspect, the sixth aspect, or the eighth aspect, or an apparatus included in the first terminal device, for example, a chip or a chip system. Alternatively, the communication apparatus may be the network device in the second aspect to the fifth aspect, the seventh aspect, or the ninth aspect, or an apparatus included in the network device, for example, a chip or a chip system.

According to a fourteenth aspect, a computer-readable storage medium is provided. The computer-readable storage medium stores a computer program or instructions. When the computer program or instructions are run on a communication apparatus, the communication apparatus is enabled to perform the method according to any one of the foregoing aspects.

According to a fifteenth aspect, a computer program product including instructions is provided. When the instructions are run on a communication apparatus, the communication apparatus is enabled to perform the method according to any one of the foregoing aspects.

According to a sixteenth aspect, a communication apparatus (for example, the communication apparatus may be a chip or a chip system) is provided. The communication apparatus includes a processor, configured to implement a function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the tenth aspect to the sixteenth aspect is a chip, a sending action/function of the communication apparatus may be understood as outputting information, and a receiving action/function of the communication apparatus may be understood as inputting information.

For technical effects brought by any one of the designs of the tenth aspect to the sixteenth aspect, refer to the technical effects brought by different designs of the first aspect to the ninth aspect. Details are not described herein again.

### BRIEF DESCRIPTION OF DRAWINGS

FIG. 1 is a diagram in which measurement and receiving cannot be simultaneously performed according to this application;
FIG. 2a is a diagram of lengths of time-domain symbols at different subcarrier spacings according to this application;
FIG. 2b is a diagram of performing beam switching in an RMTC window according to this application;
FIG. 3 is a diagram of a structure of a communication system according to this application;
FIG. 4 is a schematic flowchart of a measurement and scheduling method according to this application;
FIG. 5 is a diagram of a first time-domain symbol group according to this application;
FIG. 6 is a diagram of a second time-domain symbol group according to this application;
FIG. 7a is a diagram of a relationship between an RMTC window and a first time-domain symbol group according to this application;
FIG. 7b is a diagram of a relationship between an RMTC window, a first time-domain symbol group, and a second time-domain symbol group according to this application;
FIG. 7c is another diagram of a relationship between an RMTC window and a first time-domain symbol group according to this application;
FIG. 7d is still another diagram of a relationship between an RMTC window and a first time-domain symbol group according to this application;
FIG. 8 is a diagram of a scheduling restriction in a same frequency band according to this application;
FIG. 9 is a schematic flowchart of another measurement and scheduling method according to this application;
FIG. 10 is a diagram of a fifth time-domain symbol group according to this application;
FIG. 11 is another diagram of a fifth time-domain symbol group according to this application;
FIG. 12a is a diagram of a scenario in which beam switching does not need to be performed according to this application;
FIG. 12b is still another diagram of a fifth time-domain symbol group according to this application;
FIG. 13 is a diagram of another scheduling restriction in a same frequency band according to this application;
FIG. 14 is a schematic flowchart of still another measurement and scheduling method according to this application;
FIG. 15 is a diagram of a structure of a communication apparatus according to this application;
FIG. 16 is a diagram of a structure of another communication apparatus according to this application; and
FIG. 17 is a diagram of a structure of still another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

In a wireless communication system, different networks may use a same unlicensed frequency band. Therefore, when working on an unlicensed spectrum, a terminal device may be interfered, affecting data transmission and a throughput. To reduce the interference on the unlicensed spectrum, received signal strength indicator (received signal strength indicator, RSSI) measurement and channel occupancy (channel occupancy, CO) measurement are introduced.

In a low-frequency unlicensed frequency band in a frequency range 1 (frequency range 1, FR 1), the terminal device may perform receiving by using an omnidirectional antenna, and does not need to align a beam in a specific direction. Therefore, in the low-frequency unlicensed frequency band, if RSSI/CO measurement bandwidth is within an active (active) bandwidth part (bandwidth part, BWP) of a serving cell of the terminal device, the terminal device may simultaneously perform RSSI/CO measurement and downlink receiving.

In a high-frequency unlicensed frequency band in a frequency range 2 (frequency range 2, FR 2), because a frequency is high, a fine beam needs to be used to increase coverage. In this case, the terminal device needs to perform downlink receiving in a beam direction by using a beamforming technology. In addition, the terminal device needs to perform RSSI/CO measurement in a beam direction.

A network device may send an RSSI measurement timing configuration (RSSI measurement timing configuration, RMTC) to the terminal device, to configure the terminal device to perform RSSI/CO measurement. For example, the RMTC configuration may include at least one of the following:
RMTC periodicity (RMTC-Periodicity): indicates a periodicity of the RSSI/CO measurement.
RMTC subframe offset (RMTC-SubFameOffset): indicates a start time-domain location of an RMTC window. The RMTC window may be understood as a time-domain resource for the RSSI/CO measurement.
Measurement duration symbol (measDurationsymbols): indicates duration occupied by an RMTC window.
RMTC frequency (rmtc-Frequency): indicates a center frequency of measurement bandwidth of the RSSI/CO measurement. For example, the indication may be an absolute frequency, for example, an absolute radio frequency channel number (absolute radio frequency channel number, ARFCN). A carrier on which the RSSI/CO measurement is performed may be learned of based on the absolute frequency.
Reference subcarrier spacing (ref-SCS-CP): indicates a reference subcarrier spacing (subcarrier spacing, SCS) and a cyclic prefix (cyclic prefix, CP) that are used for the RSSI measurement.

For the high-frequency band, in addition to the at least one of the foregoing, the RMTC configuration may further include at least one of the following:
RMTC bandwidth (rmtc-Bandwidth): indicates measurement bandwidth of the RSSI/CO measurement.
Transmission configuration indicator (transmission configuration indicator)-state information (tci-StateInfo): indicates a TCI state (TCI state) for the RSSI measurement, where the TCI state indicates a downlink (downlink, DL) reference signal (reference signal, RS). An RSSI measurement resource and the downlink reference signal (a corresponding reference signal resource) are quasi co-located (quasi Co-located, QCL-ed). The RSSI measurement resource is used for the RSSI measurement/CO measurement. For example, the RSSI measurement resource may be a time-frequency resource.

Usually, "QCL-ed" in this application is QCL of a type D (typeD) (that is, QCL-ed with typeD). Certainly, in variations of various operations provided in embodiments of this application, "QCL-ed" may alternatively be QCL of another type (for example, typeA, typeB, or typeC). This is not limited herein.

That a plurality of resources are QCL-ed may indicate that the plurality of resources have one or more same or similar communication features. A same or similar communication configuration may be used for the plurality of resources that are QCL-ed. For example, receiving may be performed on the plurality of resources by using a same beam. In this case, it may be considered that the TCI state information indicates a beam used for the RSSI/CO measurement.

The beam may be represented in a protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), QCL information, a QCL assumption, a QCL indication, or the like. The beam may be indicated by using a transmission configuration indication (transmission configuration indication, TCI)-state (TCI-state) parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state, the spatial relation, or the like. The foregoing terms are also equivalent to each other. In this application, the beam may alternatively be replaced with another term for representing a beam. This is not limited in this application.

When the RMTC configuration does not include the TCI state information, the terminal device may assume that the RSSI measurement resource is QCL-ed with a recently received physical downlink shared channel (physical downlink shared channel, PDSCH) or a recently monitored control resource set (control resource set, CORESET) on an active BWP (active BWP) of a current carrier. That a resource is QCL-ed with a channel may be understood as that the resource is QCL-ed with a time-frequency resource on which the channel is located.

As described above, an RSSI/CO measurement mechanism and the RMTC configuration in the low-frequency band are different from those in the high-frequency band. Therefore, some implementations of the RSSI/CO measurement in the low-frequency band may no longer be applicable to the high-frequency band.

In one aspect, in the low-frequency band, the terminal device may simultaneously perform RSSI/CO measurement and downlink receiving. Therefore, the network device may configure the terminal device to simultaneously perform RSSI/CO measurement and downlink receiving. However, in the high-frequency band, the terminal device may not be incapable of simultaneously performing RSSI/CO measurement and downlink receiving.

For example, it is assumed that a beam configured by the network device on a carrier 1 for RSSI/CO measurement is a beam 1, and a beam configured in an RMTC window on the carrier 1 for downlink sending is a beam 2. In this case, because the terminal device can align a beam only in one direction at a same moment, the terminal device cannot simultaneously perform RSSI/CO measurement and downlink receiving in the RMTC window on the carrier 1.

In addition, in a carrier aggregation (carrier aggregation, CA) scenario, the foregoing limitation also exists on a carrier 2 that is in a same frequency band as the carrier 1. During CA, to increase a peak rate of the terminal device, carriers of a plurality of cells may be aggregated and then provided for the terminal device. Therefore, the carrier 1 and the carrier 2 may be carriers of different cells. In addition, one of the carrier 1 and the carrier 2 may be a primary component carrier, and the other may be a secondary component carrier; or both the carrier 1 and the carrier 2 may be secondary component carriers.

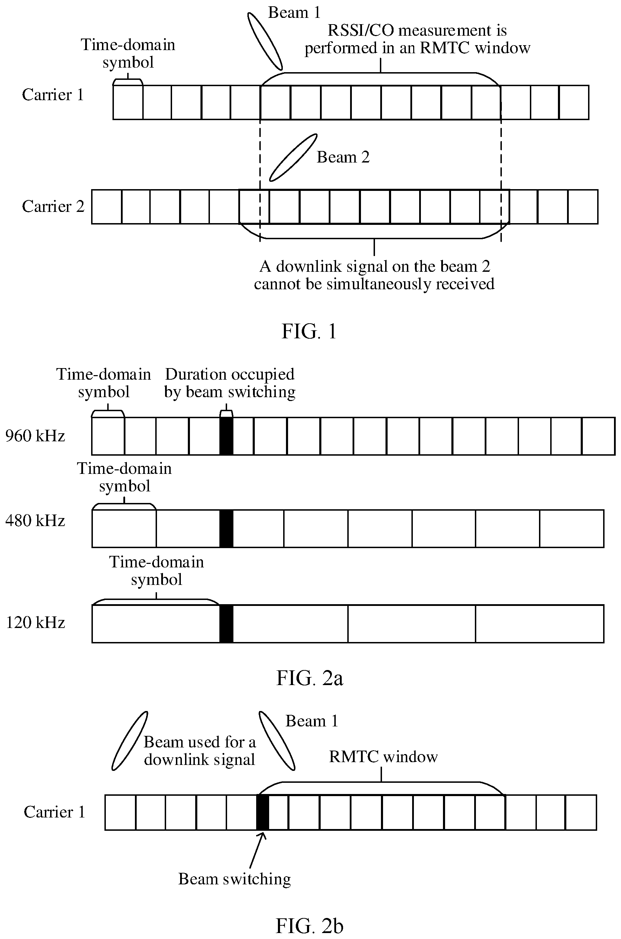

As shown in FIG. 1, when performing RSSI/CO measurement on the carrier 1 by using the beam 1, the terminal device cannot receive a downlink signal on the beam 2 on a time-domain symbol that is on the carrier 2 and that overlaps an RMTC window. In the foregoing scenario, if the network device still configures the terminal device to simultaneously perform RSSI/CO measurement and downlink receiving, a downlink receiving failure or an RSSI/CO measurement failure may occur.

In another aspect, in the high-frequency band, a new larger subcarrier spacing may be introduced, for example, a subcarrier spacing of 480 kilohertz (kHz) or 960 kHz. In 480 kHz/960 kHz, in comparison with a smaller subcarrier spacing (for example, 120 kHz), a length of a time-domain symbol is greatly reduced, and a CP is also very short. Therefore, time for beam switching by the terminal device cannot be ignored. In this scenario, if the RSSI/CO measurement is still performed according to the current solution, a measurement result may have a large error.

For example, as shown in FIG. 2a, when duration occupied by beam switching is the same, and the subcarrier spacing is 120 kHz, a proportion of beam switching on one time-domain symbol is very small. In this case, the time for beam switching may be ignored. However, when the subcarrier spacing is 480 kHz or 960 kHz, because the length of the time-domain symbol is reduced, the proportion of beam switching on one time-domain symbol is greatly increased, and the time for beam switching cannot be ignored any more.

Beam switching may be to adjust a beam direction, adjust a spatial reception parameter, or the like. The time-domain symbol may be a minimum granularity of a time-domain resource. For example, the time-domain symbol may be an orthogonal frequency division multiplexing (orthogonal frequency division multiplexing, OFDM) symbol or the like.

For example, as shown in FIG. 2b, it is assumed that the network device configures the terminal device to perform RSSI/CO measurement on the carrier 1 by using the beam 1, and a beam that is used for a downlink signal and that is before the RMTC window is different from the beam 1. In this case, before the measurement, the terminal device needs to perform beam switching to switch to the beam 1. If beam switching is performed in the RMTC window, for example, as shown in FIG. 2b, beam switching is performed on a 1^{st} time-domain symbol in the RMTC window, that is, a part of duration of the 1^{st} time-domain symbol is occupied by beam switching, power measured by the terminal device on the 1^{st} time-domain symbol may be less than actual power on the time-domain symbol. Consequently, a final measurement result has a large error.

For example, a part of time of the 1^{st} time-domain symbol is occupied by beam switching, and the terminal device cannot measure all power on the entire time-domain symbol (for example, only 70% power on the time-domain symbol is measured). Based on this, the following case may occur: The actual power on the time-domain symbol is greater than a threshold of the CO measurement, but only the 70% power is measured, and in this case, it is determined that the power on the time-domain symbol is less than the threshold of the CO measurement, affecting a measurement result of the CO measurement. In addition, because only the 70% power on the time-domain symbol is measured, a measurement result of the RSSI measurement is small.

Similarly, if a beam used for a downlink signal on a 1^{st} time-domain symbol after the RMTC window is different from the beam 1, beam switching performed by the terminal device on a last time-domain symbol in the RMTC window also affects the measurement result.

In view of this, this application provides a measurement and scheduling method, to reduce a measurement error, or reduce a waste of resources due to a downlink receiving failure or an RSSI/CO measurement failure.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE-NR hybrid networking system, a device-to-device (device-to-device, D2D) system, a machine-to-machine (machine-to-machine, M2M) communication system, internet of things (Internet of Things, IoT), another next-generation communication system, and the like. Alternatively, the communication system may be a non-3GPP communication system. This is not limited.

The communication system applicable to this application is merely an example for description, and the communication system applicable to this application is not limited thereto. This is uniformly described herein, and details are not described below again.

The technical solutions provided in this application may be applied to RSSI/CO measurement in various scenarios, for example, may be applied to unlicensed spectrum RSSI/CO measurement, or may be applied to cross link interference (cross link interference, CLI)-RSSI measurement. Certainly, the technical solutions may be further applied to RSSI/CO measurement in another scenario. This is not specifically limited in this application.

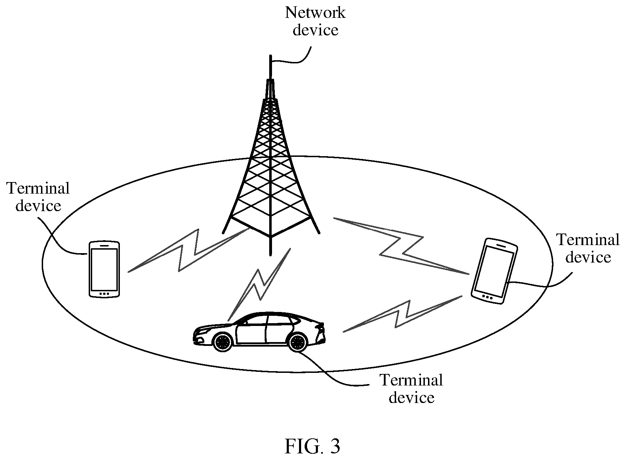

FIG. 3 shows a communication system according to this application. The communication system includes a network device and at least one terminal device. Optionally, different terminal devices may communicate with each other.

Optionally, the network device is a device for connecting a terminal device to a wireless network, and may be an evolved NodeB (evolved NodeB, eNB or eNodeB) in an LTE or LTE-Advanced (LTE-Advanced, LTE-A) system, for example, a conventional macro base station eNB and a micro base station eNB in a heterogeneous network scenario; may be a next generation NodeB (next generation NodeB, gNodeB or gNB) in a 5G system; may be a transmission reception point (transmission reception point, TRP); may be a base station in a future evolved public land mobile network (public land mobile network, PLMN); may be a broadband network gateway (broadband network gateway, BNG), an aggregation switch, or a non-3GPP access device; may be a radio controller in a cloud radio access network (cloud radio access network, CRAN); may be an access node (access point, AP) in a Wi-Fi system; may be a radio relay node or a radio backhaul node; or may be a device for implementing a base station function in IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

Optionally, the terminal device may be a user-side device that has a wireless transceiver function. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, including an indoor or outdoor terminal device, a handheld or vehicle-mounted terminal device; or may be deployed on water (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

With reference to the accompanying drawings, the following describes in detail a method provided in embodiments of this application by using interaction between a terminal device and a network device as an example.

It may be understood that in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

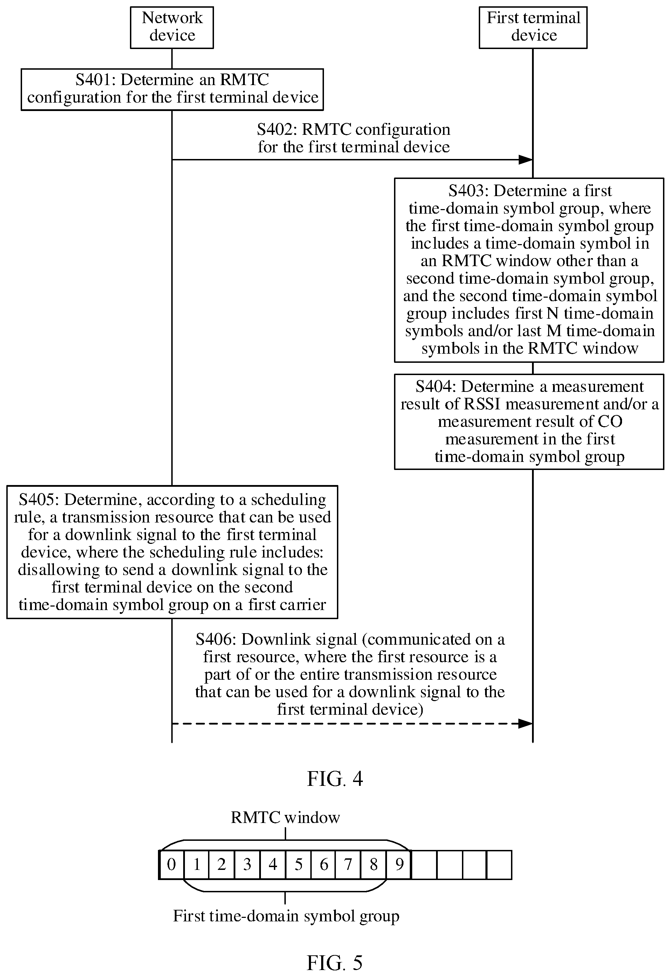

FIG. 4 shows a measurement and scheduling method according to an embodiment of this application. The measurement and scheduling method includes the following steps.

S401: A network device determines an RMTC configuration for a first terminal device.

The RMTC configuration is used for RSSI measurement and/or CO measurement. For example, the RMTC configuration may be used to configure the first terminal device to perform RSSI measurement and/or CO measurement in an RMTC window on a first carrier.

Optionally, the RMTC configuration may be used to configure an RSSI measurement resource, for example, configure a length and a time-domain location of the RMTC window, measurement bandwidth of the RSSI measurement and/or measurement bandwidth of the CO measurement, and a carrier (referred to as the "first carrier" in the following embodiments of this application) on which the measurement bandwidth of the RSSI measurement and/or the measurement bandwidth of the CO measurement are/is located. It may be understood that the RMTC measurement resource is used for the RSSI/CO measurement.

Further, the RMTC configuration may further include TCI state information, and the TCI state information may indicate a reference signal that is QCL-ed with the RSSI measurement resource. The terminal device may determine, based on the TCI state information, a beam used for the RSSI measurement and/or the CO measurement. Certainly, the RMTC configuration may not include the TCI state information. For details, refer to related descriptions of the RMTC configuration. The details are not described herein again.

S402: The network device sends the RMTC configuration for the first terminal device to the first terminal device. Correspondingly, the first terminal device receives the RMTC configuration from the network device.

Optionally, after receiving the RMTC configuration, the first terminal device may determine the RSSI measurement resource, for example, the RMTC window and the first carrier, based on the RMTC configuration. When the RMTC configuration includes the TCI state information, the beam used for the RSSI measurement and/or the CO measurement may be further determined based on the RMTC configuration. When the RMTC configuration does not include the TCI state information, the first terminal device may determine that the RSSI measurement resource is QCL-ed with a recently received PDSCH or a recently monitored CORESET on an active BWP of the first carrier, to determine the beam used for the RSSI measurement and/or the CO measurement.

S403: The first terminal device determines a first time-domain symbol group.

S404: The first terminal device determines a measurement result of the RSSI measurement and/or a measurement result of the CO measurement in the first time-domain symbol group. In other words, a time-domain resource actually used to calculate a measurement result is not the RMTC window, but the first time-domain symbol group.

Optionally, the first terminal device may perform RSSI/CO measurement in the RMTC window, and determine the measurement result in the first time-domain symbol group. Alternatively, the first terminal device may perform RSSI/CO measurement on the first time-domain symbol group, and determine the measurement result in the first time-domain symbol group. This is not specifically limited in this application.

The first time-domain symbol group includes a time-domain symbol in the RMTC window other than a second time-domain symbol group. The second time-domain symbol group includes first N time-domain symbols and/or last M time-domain symbols in the RMTC window. N and M are positive integers. In other words, the first time-domain symbol group is located in the RMTC window, and the first time-domain symbol group does not include the first N time-domain symbols and/or the last M time-domain symbols in the RMTC window.

For example, as shown in FIG. 5, the RMTC window configured by using the RMTC configuration includes 10 time-domain symbols whose indexes are 0 to 9. Assuming that N and M are equal to 1, that is, the second time-domain symbol group includes a 1^{st} time-domain symbol and a last time-domain symbol in the RMTC window, the first time-domain symbol group includes time-domain symbols whose indexes are 1 to 8 in the RMTC window.

For the second time-domain symbol group, in a first possible implementation, if a first subcarrier spacing is greater than or equal to a first threshold, the second time-domain symbol group includes the first N time-domain symbols and/or the last M time-domain symbols in the RMTC window. For example, the first threshold may be 480 kHz. Optionally, if the first subcarrier spacing is less than the first threshold, the first time-domain symbol group includes all time-domain symbols in the RMTC window, that is, the first time-domain symbol group is the same as the RMTC window (where it may be considered that the second time-domain symbol group does not exist in this case).

The first subcarrier spacing is a subcarrier spacing of the active BWP of the first carrier, or the first subcarrier spacing is a subcarrier spacing of the RSSI/CO measurement. For example, the subcarrier spacing of the RSSI/CO measurement may be indicated in the RMTC configuration.

In a second possible implementation, if a first subcarrier spacing is 480 kHz or 960 kHz, the second time-domain symbol group includes the first N time-domain symbols and/or the last M time-domain symbols in the RMTC window. Optionally, if the first subcarrier spacing is 120 kHz, the first time-domain symbol group includes all time-domain symbols in the RMTC window.

In a third possible implementation, if the RSSI measurement resource and a first downlink signal are not QCL-ed (QCL-ed), the second time-domain symbol group includes the first N time-domain symbols in the RMTC window; and/or if the RSSI measurement resource and a second downlink signal are not QCL-ed, the second time-domain symbol group includes the last M time-domain symbols in the RMTC window.

That a resource and a signal are (or are not) QCL-ed may be understood as that the resource and a resource carrying the signal are (or are not) QCL-ed. In addition, in this application, that A and B are not QCL-ed may also be described as that A and B do not have a QCL relationship. Similarly, that A and B are QCL-ed may also be described as that A and B have a QCL relationship.

Optionally, the first downlink signal is a downlink signal on a 1^{st} time-domain symbol before the RMTC window. For example, the 1^{st} time-domain symbol before the RMTC window is a time-domain symbol that is before the RMTC window and that is adjacent to a 1^{st} time-domain symbol in the RMTC window. Alternatively, the first downlink signal is a downlink signal that is before the RMTC window and that is closest to the RMTC window. When the RSSI measurement resource and the first downlink signal are not QCL-ed, the beam used for the RSSI/CO measurement is different from a beam used for the first downlink signal (for example, a transmit beam of the first downlink signal), and the first terminal device cannot use a same beam to perform RSSI/CO measurement and receive the first downlink signal. Therefore, after receiving the first downlink signal, the first terminal device needs to perform beam switching to perform RSSI/CO measurement. In this way, "if the RSSI measurement resource and the first downlink signal are not QCL-ed" may also be described as "if beam switching needs to be performed before the RSSI/CO measurement".

In this case, if beam switching is performed on the first N time-domain symbols in the RMTC window, a measurement result for the first N time-domain symbols is affected. In this case, the first N time-domain symbols in the RMTC window may be excluded from the first time-domain symbol group, to reduce impact of beam switching on the measurement result, and reduce a measurement error.

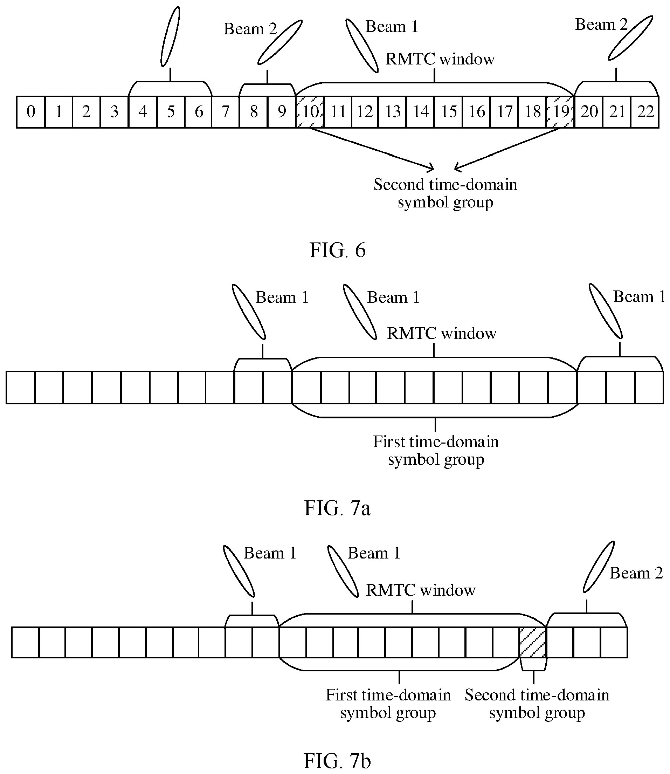

For example, as shown in FIG. 6, the RMTC window includes time-domain symbols whose indexes are 10 to 19, and downlink signals before the RMTC window include a downlink signal communicated on the time-domain symbols whose indexes are 4 to 6, and a downlink signal communicated on the time-domain symbols whose indexes are 8 and 9. In this case, the first downlink signal is a downlink signal communicated on the time-domain symbols whose indexes are 8 and 9. It is assumed that the beam used for the RSSI/CO measurement is a beam 1, and the beam used for the first downlink signal is a beam 2. In this case, the second time-domain symbol group includes the first N time-domain symbols in the RMTC window. For example, N is equal to 1. The second time-domain symbol group includes the time-domain symbol whose index is 10.

Optionally, the second downlink signal is a downlink signal on a 1^{st} time-domain symbol after the RMTC window, or the second downlink signal is a downlink signal that is after the RMTC window and that is closest to the RMTC window. In other words, if the RSSI measurement resource and a resource carrying the second downlink signal are not QCL-ed, the second time-domain symbol group includes the last M time-domain symbols in the RMTC window. A QCL relationship between the RSSI measurement resource and the resource carrying the second downlink signal may be preconfigured by the network device.

When the RSSI measurement resource and the second downlink signal are not QCL-ed, the beam used for the RSSI/CO measurement is different from a beam used for the second downlink signal (for example, a transmit beam of the second downlink signal), and the first terminal device cannot use a same beam to perform RSSI/CO measurement and receive the second downlink signal. Therefore, after the RSSI/CO measurement, the first terminal device needs to perform beam switching to receive the second downlink signal. In this way, "if the RSSI measurement resource and the second downlink signal are not QCL-ed" may also be described as "if beam switching needs to be performed after the RSSI/CO measurement".

In this case, if beam switching is performed on the last M time-domain symbols in the RMTC window, a measurement result for the last M time-domain symbols is affected. In this case, the last M time-domain symbols in the RMTC window may be excluded from the first time-domain symbol group, to reduce impact of beam switching on the measurement result, and reduce a measurement error.

For example, as shown in FIG. 6, the RMTC window includes the time-domain symbols whose indexes are 10 to 19, and time-domain symbols whose indexes are 20 to 22 are used to carry a downlink signal. It is assumed that the beam used for the RSSI/CO measurement is the beam 1, and a beam used for the downlink signal is the beam 2. In this case, the second time-domain symbol group includes the last M time-domain symbols in the RMTC window. For example, M is equal to 1. The second time-domain symbol group includes the time-domain symbol whose index is 19.

Optionally, if the RSSI measurement resource and the first downlink signal are QCL-ed, the second time-domain symbol group does not include the first N time-domain symbols in the RMTC window, in other words, the first time-domain symbol group further includes the first N time-domain symbols in the RMTC window; and/or if the RSSI measurement resource and the second downlink signal are QCL-ed, the second time-domain symbol group does not include the last M time-domain symbols in the RMTC window, in other words, the first time-domain symbol group further includes the last M time-domain symbols in the RMTC window; and/or if the 1^{st} time-domain symbol after the RMTC window is not used to carry a downlink signal, the second time-domain symbol group does not include the last M time-domain symbols in the RMTC window.

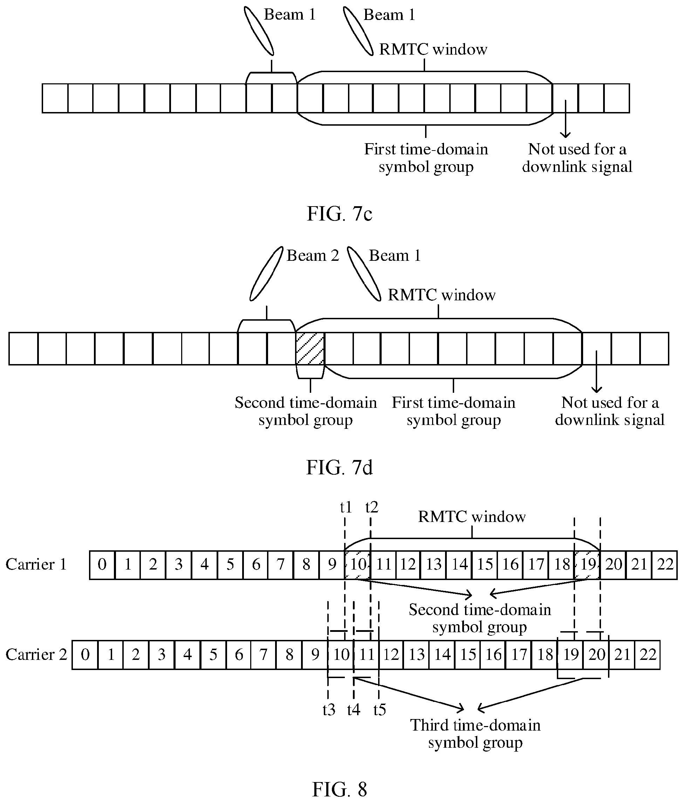

For example, as shown in FIG. 7a, if the RSSI measurement resource and the first downlink signal are QCL-ed, and the RSSI measurement resource and the second downlink signal are QCL-ed, the first time-domain symbol group is the same as the RMTC window, and the second time-domain symbol group does not exist. As shown in FIG. 7b, the RSSI measurement resource and the first downlink signal are QCL-ed, and the RSSI measurement resource and the second downlink signal are not QCL-ed. In this case, the second time-domain symbol group includes the last M time-domain symbols in the RMTC window. In FIG. 7b, an example in which M is equal to 1 is used for description. As shown in FIG. 7c, the RSSI measurement resource and the first downlink signal are QCL-ed, and the 1^{st} time-domain symbol after the RMTC window is not used to carry a downlink signal. In this case, the first time-domain symbol group is the same as the RMTC window, and the second time-domain symbol group does not exist. As shown in FIG. 7d, the RSSI measurement resource and the first downlink signal are not QCL-ed, and the 1^{st} time-domain symbol after the RMTC window is not used to carry a downlink signal. In this case, the second time-domain symbol group includes the first N time-domain symbols in the RMTC window. In FIG. 7d, an example in which N is equal to 1 is used for description.

Optionally, the downlink signal in this application may be at least one of a PDSCH, a physical downlink control channel (physical downlink control channel, PDCCH), a reference signal, and the like. The reference signal may be, for example, a channel state information-reference signal (channel state information-reference signal, CSI-RS), a demodulation reference signal (demodulation reference signal, DMRS), or the like. This is not specifically limited in this application.

Based on steps S403 and S404, when determining the measurement result of the RSSI measurement and/or the measurement result of the CO measurement, the terminal device excludes the first N time-domain symbols and/or the last M time-domain symbols in the RMTC window. When beam switching is performed on the first N time-domain symbols and/or the last M time-domain symbols, because the first N time-domain symbols and/or the last M time-domain symbols do not participate in calculation of the measurement result, impact of beam switching on the measurement result can be reduced, thereby reducing a measurement error.

S405: The network device determines, according to a scheduling rule, a transmission resource that can be used for a downlink signal to the first terminal device.

In a first possible implementation, the scheduling rule includes a rule (1): The network device is disallowed to send a downlink signal to the first terminal device on the second time-domain symbol group on the first carrier, in other words, the network device does not send a downlink signal to the first terminal device on the second time-domain symbol group on the first carrier. In other words, the transmission resource that can be used for a downlink signal to the first terminal device does not include the second time-domain symbol group on the first carrier. For the first carrier and the second time-domain symbol group, refer to related descriptions of steps S403 and S404. Details are not described herein again.

It can be learned from the foregoing analysis that the first terminal device may perform beam switching on the second time-domain symbol group. In this scenario, if the network device sends a downlink signal to the first terminal device on the second time-domain symbol group on the first carrier, the first terminal device may be incapable of performing downlink receiving. Consequently, a transmission failure occurs, causing a waste of resources. According to the rule (1), the network device is disallowed to send a downlink signal to the first terminal device on the second time-domain symbol group on the first carrier. Therefore, the network device may not send a downlink signal to the first terminal device on the second time-domain symbol group on the first carrier, so that the waste of resources is reduced.

In a second possible implementation, the scheduling rule may include a rule (2): The network device is disallowed to send, to the first terminal device on the first time-domain symbol group on the first carrier, a downlink signal that is not QCL-ed with the RSSI measurement resource. In other words, the rule (2) may be described as that a network is allowed to send, to the first terminal device on the first time-domain symbol group on the first carrier, a downlink signal that is QCL-ed with the RSSI measurement resource. For the first time-domain symbol group, refer to related descriptions of steps S403 and S404. Details are not described herein again.

In other words, the transmission resource that can be used for a downlink signal to the first terminal device may include the first time-domain symbol group on the first carrier, and the downlink signal is QCL-ed with the RSSI measurement resource.

Optionally, whether the transmission resource that can be used for a downlink signal to the first terminal device finally includes the first time-domain symbol group on the first carrier may be determined based on a capability of the terminal device. In this scenario, the method provided in this embodiment of this application may further include the following steps.

The first terminal device determines capability information, and sends the capability information to the network device. Correspondingly, the network device receives the capability information from the terminal device. The capability information indicates whether the first terminal device supports simultaneously performing RSSI/CO measurement and downlink receiving when an RSSI measurement resource and a downlink signal are QCL-ed.

Optionally, after the network device receives the capability information, if the capability information indicates that the first terminal device supports simultaneously performing RSSI/CO measurement and downlink receiving when an RSSI measurement resource and a downlink signal are QCL-ed, the transmission resource that can be used for a downlink signal to the first terminal device may include the first time-domain symbol group on the first carrier. If the capability information indicates that the first terminal device does not support simultaneously performing RSSI/CO measurement and downlink receiving when an RSSI measurement resource and a downlink signal are QCL-ed, the transmission resource that can be used for a downlink signal to the first terminal device does not include the first time-domain symbol group on the first carrier.

Optionally, the first terminal device does not support simultaneously performing RSSI/CO measurement and downlink receiving when an RSSI measurement resource and a downlink signal are QCL-ed. If the network device still configures the first terminal device to receive the downlink signal while performing RSSI/CO measurement on the RSSI measurement resource, the first terminal device may perform RSSI/CO measurement on the RSSI resource, and not receive the downlink signal. In other words, the first terminal device preferentially performs RSSI/CO measurement, or a priority of the RSSI/CO measurement is higher than a priority of the downlink receiving.

Optionally, the first terminal device supports simultaneously performing RSSI/CO measurement and downlink receiving when an RSSI measurement resource and a downlink signal are QCL-ed. If the network device configures the first terminal device to receive the downlink signal while performing RSSI/CO measurement on the RSSI measurement resource, the first terminal device may receive the downlink signal while performing RSSI/CO measurement on the RSSI resource.

According to the rule (2), the network device can send, to the first terminal device on the first time-domain symbol group on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

It should be noted that the scheduling rule in this application may also be referred to as a scheduling restriction, and the scheduling rule and the scheduling restriction may be replaced with each other. Certainly, the scheduling rule may have another name, for example, a first rule. This is not specifically limited in this application.

It should be noted that the rule (1) and the rule (2) may be used independently, in other words, there is no dependency relationship between the rule (1) and the rule (2). Certainly, the rule (1) and the rule (2) may also be used in combination. For example, the scheduling rule may include both the rule (1) and the rule (2).

Optionally, the rule (1) and the rule (2) may be considered as a scheduling restriction of the first carrier or a serving cell on the first carrier. In addition, the scheduling restriction is also applicable to a time-domain symbol that is on another carrier in a same frequency band as the first carrier and that fully or partially overlaps a restricted time-domain symbol. A restricted time-domain symbol in the rule (1) may be a time-domain symbol in the second time-domain symbol group. A restricted time-domain symbol in the rule (2) may be a time-domain symbol in the first time-domain symbol group. In other words, the scheduling rule may further include a rule (3) and/or a rule (4) in the following.

The rule (3) includes: The network device is disallowed to send a downlink signal to the first terminal device on a third time-domain symbol group on the second carrier. In other words, the network device does not send a downlink signal to the first terminal device on the third time-domain symbol group on the second carrier.

Optionally, the second carrier and the first carrier are in a same frequency band. Further, the second carrier and the first carrier are carriers that provide services for the first terminal device in a carrier aggregation scenario.

Optionally, a time-domain symbol in the third time-domain symbol group partially or fully overlaps time-domain symbols in the second time-domain symbol group. For example, each time-domain symbol in the third time-domain symbol group may partially or fully overlap with at least one time-domain symbol in the second time-domain symbol group; or a time-domain location of each time-domain symbol in the third time-domain symbol group partially or fully overlaps a time-domain location of at least one time-domain symbol in the second time-domain symbol group. The time-domain location may be an absolute time-domain location.

For example, as shown in FIG. 8, the first carrier is a carrier 1, and the second carrier is a carrier 2. It is assumed that the RMTC window on the carrier 1 includes time-domain symbols whose indexes are 10 to 19, and the second time-domain symbol group includes the time-domain symbols whose indexes are 10 and 19. In this case, the third time-domain symbol group on the carrier 2 includes time-domain symbols whose indexes are 10, 11, 19, and 20 on the carrier 2. The time-domain symbols whose indexes are 10 and 11 on the carrier 2 partially overlap with the time-domain symbol whose index is 10 on the carrier 1, in other words, a time-domain location (t3 to t4) of the time-domain symbol whose index is 10 on the carrier 2 partially overlaps with a time-domain location (t1 to t2) of the time-domain symbol whose index is 10 on the carrier 1. A time-domain location (t4 to t5) of the time-domain symbol whose index is 11 on the carrier 2 partially overlaps the time-domain location (t1 to t2) of the time-domain symbol whose index is 10 on the carrier 1.

According to the rule (3), the network device is disallowed to send a downlink signal to the first terminal device on the third time-domain symbol group on the second carrier. Therefore, the network device may not send a downlink signal to the first terminal device on the third time-domain symbol group on the second carrier, so that the waste of resources is reduced.

The rule (4) includes: The network device is disallowed to send, to the first terminal device on a fourth time-domain symbol group on the second carrier, a downlink signal that is not QCL-ed with the RSSI measurement resource. In other words, the rule (4) may be described as that the network device is allowed to send, to the first terminal device on the fourth time-domain symbol group on the second carrier, a downlink signal that is QCL-ed with the RSSI measurement resource. For the second carrier, refer to related descriptions in the rule (3). Details are not described herein again.

In other words, the transmission resource that can be used for a downlink signal to the first terminal device may include the fourth time-domain symbol group on the second carrier, and the downlink signal is QCL-ed with the RSSI measurement resource.

Optionally, a time-domain symbol in the fourth time-domain symbol group partially or fully overlaps time-domain symbols in the first time-domain symbol group. For example, a time-domain location of the fourth time-domain symbol group includes a time-domain location in time-domain locations of the RMTC window other than a time-domain location of the third time-domain symbol group. The time-domain location may be an absolute time-domain location.

For example, based on the example shown in FIG. 8, the fourth time-domain symbol group may include time-domain symbols whose indexes are 12 to 18 on the carrier 2.

Optionally, whether the transmission resource that can be used for a downlink signal to the first terminal device finally includes the fourth time-domain symbol group on the second carrier may be determined based on a capability of the terminal device. For details, refer to related descriptions in the rule (2). The details are not described herein again.

According to the rule (4), the network device can send, to the first terminal device on the fourth time-domain symbol group on the second carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

It should be noted that there is no strict execution sequence between step S405 and step S402. Step S402 may be performed before step S405, or step S405 may be performed before step S402, or step S402 and step S405 may be simultaneously performed. This is not specifically limited in this application.

Optionally, after step S405, the method provided in this embodiment of this application may further include step S406.

S406: The network device sends a downlink signal to the first terminal device on a first resource. Correspondingly, the first terminal device receives, on the first resource, the downlink signal from the network device.

The first resource is a part of or the entiretransmission resource that can be used for a downlink signal to the first terminal device. When the first resource includes the first time-domain symbol group on the first carrier and/or the fourth time-domain symbol group on the second carrier, the first resource (or the downlink signal) and the RSSI measurement resource are QCL-ed.

Based on this solution, when determining the measurement result of the RSSI measurement and/or the measurement result of the CO measurement, the terminal device may exclude the first N time-domain symbols and/or the last M time-domain symbols in the RMTC window. When beam switching is performed on the first N time-domain symbols and/or the last M time-domain symbols, the impact of beam switching on the measurement result can be reduced, thereby reducing the measurement error. In addition, the network device does not send a downlink signal on a time-domain symbol on which beam switching is performed, so that a downlink transmission failure caused by beam switching performed by the terminal device can be avoided, thereby reducing the waste of resources.

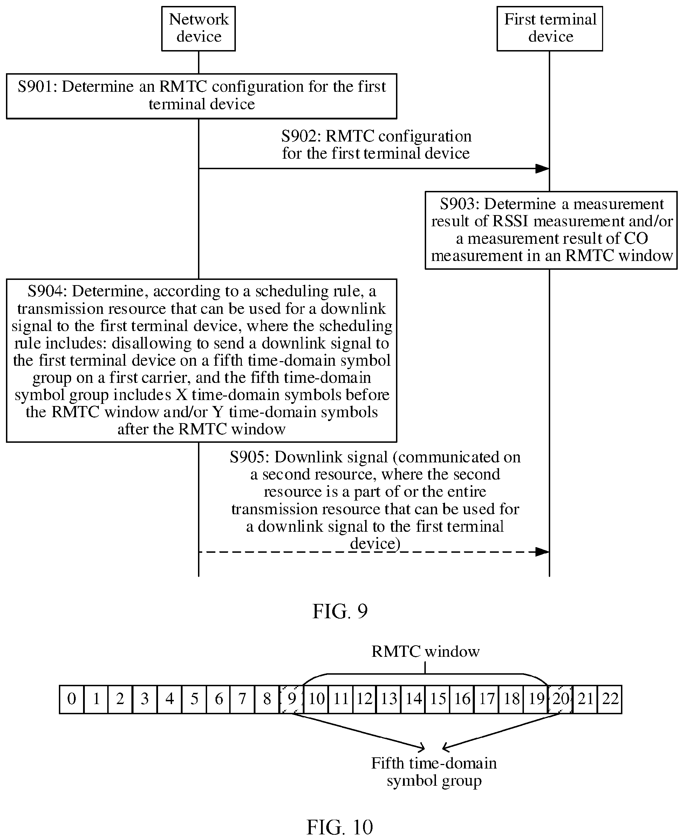

The method shown in FIG. 4 is applicable to a scenario in which beam switching is performed in the RMTC window. In addition, this application further provides a measurement and scheduling method applicable to a scenario in which beam switching is performed outside an RMTC window. As shown in FIG. 9, the measurement and scheduling method includes the following steps.

S901: A network device determines an RMTC configuration for a first terminal device.

S902: The network device sends the RMTC configuration for the first terminal device to the first terminal device. Correspondingly, the first terminal device receives the RMTC configuration from the network device.

Steps S901 and S902 are the same as steps S401 and S402. For details, refer to related descriptions of steps S401 and S402. The details are not described herein again.

S903: The first terminal device determines a measurement result of RSSI/CO measurement in an RMTC window. In other words, in the method shown in FIG. 9, a time-domain resource actually used to calculate a measurement structure is the RMTC window.

Optionally, the first terminal device may perform RSSI/CO measurement in the RMTC window, and determine the measurement result of the RSSI/CO measurement in the RMTC window.

S904: The network device determines, according to a scheduling rule, a transmission resource that can be used for a downlink signal to the first terminal device.

In a first possible implementation, the scheduling rule includes a rule (5): The network device is disallowed to send a downlink signal to the first terminal device on a fifth time-domain symbol group on a first carrier, in other words, the network device does not send a downlink signal to the first terminal device on the fifth time-domain symbol group on the first carrier. In other words, the transmission resource that can be used for a downlink signal to the first terminal device does not include the fifth time-domain symbol group on the first carrier. For the first carrier, refer to related descriptions of steps S403 and S404. Details are not described herein again.

The fifth time-domain symbol group includes X time-domain symbols before the RMTC window of the first terminal device and/or Y time-domain symbols after the RMTC window. X and Y are positive integers. Optionally, the time-domain symbol in the fifth time-domain symbol group may be used by the first terminal device to perform beam switching, that is, the first terminal device may perform beam switching on the fifth time-domain symbol group.

When X is equal to 1 and Y is equal to 1, the fifth time-domain symbol group includes one time-domain symbol before the RMTC window of the first terminal device and/or one time-domain symbol after the RMTC window. The one time-domain symbol before the RMTC window is adjacent to a 1^{st} time-domain symbol in the RMTC window. The one time-domain symbol after the RMTC window is a 1^{st} time-domain symbol after the RMTC window. For example, as shown in FIG. 10, the RMTC window includes time-domain symbols whose indexes are 10 to 19. When X is equal to 1 and Y is equal to 1, the fifth time-domain symbol group includes time-domain symbols whose indexes are 9 and 20.

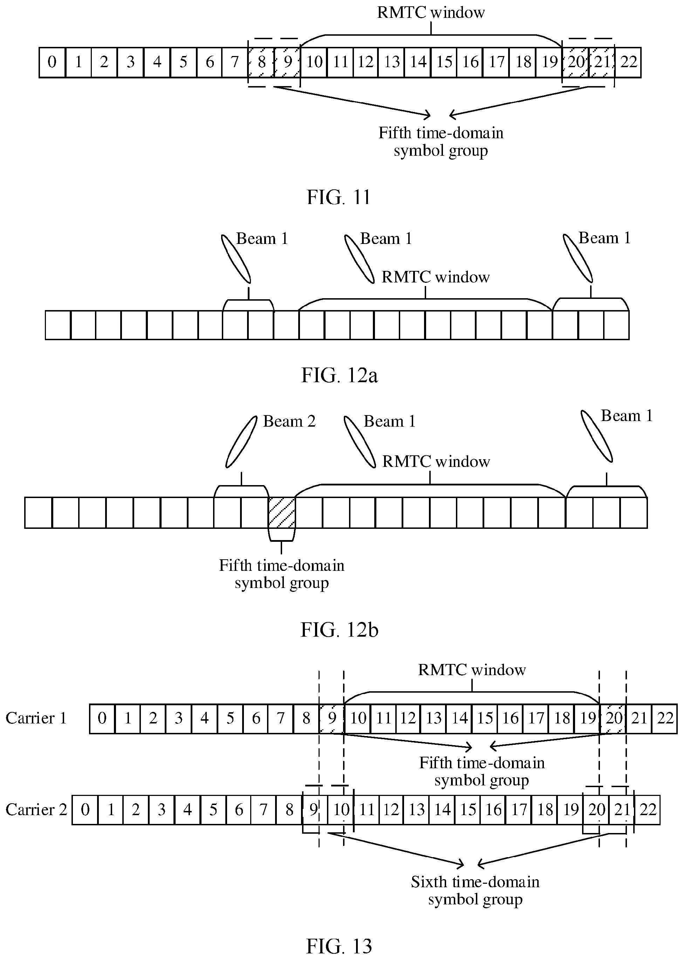

When X is greater than 1, and Y is greater than 1, the X time-domain symbols before the RMTC window are X consecutive time-domain symbols, and a last time-domain symbol in the X time-domain symbols is adjacent to the 1^{st} time-domain symbol in the RMTC window. The Y time-domain symbols after the RMTC window are Y consecutive time-domain symbols, and a 1^{st} time-domain symbol in the Y time-domain symbols is adjacent to a last time-domain symbol in the RMTC window. For example, as shown in FIG. 11, the RMTC window includes time-domain symbols whose indexes are 10 to 19. When X is equal to 2 and Y is equal to 2, the fifth time-domain symbol group includes time-domain symbols whose indexes are 8, 9, 20, and 21.

For the fifth time-domain symbol group, in a possible implementation, if a first subcarrier spacing is greater than or equal to a first threshold, the fifth time-domain symbol group includes the X time-domain symbols before the RMTC window and/or the Y time-domain symbols after the RMTC window. For the first subcarrier spacing and the first threshold, refer to related descriptions in the method shown in FIG. 4. Details are not described herein again. Optionally, if the first subcarrier spacing is less than the first threshold, the rule (5) may not take effect or may not exist.

In another possible implementation, if a first subcarrier spacing is 480 kHz or 960 kHz, the fifth time-domain symbol group includes the X time-domain symbols before the RMTC window and/or the Y time-domain symbols after the RMTC window. Optionally, if the first subcarrier spacing is 120 kHz, the rule (5) may not take effect or may not exist.

In still another possible implementation, if the RSSI measurement resource and a third downlink signal are not QCL-ed, the fifth time-domain symbol group includes the X time-domain symbols before the RMTC window; and/or if the RSSI measurement resource and a fourth downlink signal are not QCL-ed, the fifth time-domain symbol group includes the Y time-domain symbols after the RMTC window. A resource and a signal are (or are not) QCL-ed. For details, refer to related descriptions in the method shown in FIG. 4. The details are not described herein again.

Optionally, the third downlink signal is a downlink signal on the X time-domain symbols, or the third downlink signal is a downlink signal that is before the X time-domain symbols and that is closest to the X time-domain symbols. When the RSSI measurement resource and the third downlink signal are not QCL-ed, a beam used for the RSSI/CO measurement is different from a beam used for the third downlink signal (for example, a transmit beam of the third downlink signal), and the first terminal device cannot use a same beam to perform RSSI/CO measurement and receive the third downlink signal. Therefore, after receiving the third downlink signal, the first terminal device needs to perform beam switching to perform RSSI/CO measurement. In this way, "if the RSSI measurement resource and the third downlink signal are not QCL-ed" may also be described as "if beam switching needs to be performed before the RSSI/CO measurement".

In this case, if beam switching is performed on the X time-domain symbols before the RMTC window, the first terminal device may not be incapable of performing downlink receiving on the X time-domain symbols. In this scenario, if the network device still sends a downlink signal to the first terminal device on the X time-domain symbols on the first carrier, a transmission failure occurs because the first terminal device cannot perform downlink receiving, causing a waste of resources. According to the rule (5), the network device is disallowed to send a downlink signal to the first terminal device on the X time-domain symbols on the first carrier, so that a waste of resources caused because the network device sends a downlink signal but the first terminal device cannot receive the downlink signal can be reduced.

For example, as shown in FIG. 11, the RMTC window includes time-domain symbols whose indexes are 10 to 19, and X is equal to 1. It is assumed that downlink signals before the RMTC window include a downlink signal communicated on the time-domain symbols whose indexes are 4 and 5, and a downlink signal communicated on the time-domain symbols whose indexes are 7 and 8. In this case, the third downlink signal is a downlink signal communicated on the time-domain symbols whose indexes are 7 and 8. It is assumed that the beam used for the RSSI/CO measurement is a beam 1, and the beam used for the third downlink signal is a beam 2. In this case, the fifth time-domain symbol group includes one time-domain symbol before the RMTC window.

Optionally, the fourth downlink signal is a downlink signal on the Y time-domain symbols, or the fourth downlink signal is a downlink signal that is after the Y time-domain symbols and that is closest to the Y time-domain symbols. In other words, if the RSSI measurement resource and a resource carrying the fourth downlink signal are not QCL-ed, the fifth time-domain symbol group includes the Y time-domain symbols after the RMTC window. A QCL relationship between the RSSI measurement resource and the resource carrying the fourth downlink signal may be preconfigured by the network device.

When the RSSI measurement resource and the fourth downlink signal are not QCL-ed, the beam used for the RSSI/CO measurement is different from a beam used for the fourth downlink signal (for example, a transmit beam of the fourth downlink signal), and the first terminal device cannot use a same beam to perform RSSI/CO measurement and receive the fourth downlink signal. Therefore, after the RSSI/CO measurement, the first terminal device needs to perform beam switching to receive the fourth downlink signal. In this way, "if the RSSI measurement resource and the fourth downlink signal are not QCL-ed" may also be described as "if beam switching needs to be performed after the RSSI/CO measurement."

In this case, if beam switching is performed on the Y time-domain symbols after the RMTC window, the first terminal device may be incapable of performing downlink receiving on the Y time-domain symbols. In this scenario, if the network device still sends a downlink signal to the first terminal device on the Y time-domain symbols on the first carrier, a transmission failure occurs because the first terminal device cannot perform downlink receiving, causing a waste of resources. According to the rule (5), the network device is disallowed to send a downlink signal to the first terminal device on the Y time-domain symbols on the first carrier, so that a waste of resources caused because the network device sends a downlink signal but the first terminal device cannot receive the downlink signal can be reduced.

For example, as shown in FIG. 11, the RMTC window includes the time-domain symbols whose indexes are 10 to 19, and time-domain symbols whose indexes are 20 to 22 are used to carry a downlink signal. It is assumed that the beam used for the RSSI/CO measurement is the beam 1, and a beam used for the downlink signal is the beam 2. In this case, the fifth time-domain symbol group includes the time-domain symbols whose indexes are 20 to 22.

Optionally, if the RSSI measurement resource and the third downlink signal are QCL-ed, the fifth time-domain symbol group does not include the X time-domain symbols before the RMTC window; and/or if the RSSI measurement resource and the fourth downlink signal are QCL-ed, the fifth time-domain symbol group does not include the Y time-domain symbols after the RMTC window; and/or if the Y time-domain symbols after the RMTC window are not used to carry a downlink signal, the fifth time-domain symbol group does not include the Y time-domain symbols after the RMTC window.

For example, as shown in FIG. 12a, if the RSSI measurement resource and the third downlink signal are QCL-ed, and the RSSI measurement resource and the fourth downlink signal are QCL-ed, the fifth time-domain symbol group does not exist. As shown in FIG. 12b, the RSSI measurement resource and the third downlink signal are not QCL-ed, and the RSSI measurement resource and the fourth downlink signal are QCL-ed. In this case, the fifth time-domain symbol group includes the X time-domain symbols before the RMTC window. In FIG. 12b, an example in which X is equal to 1 is used for description.

In a second possible implementation, the scheduling rule may include a rule (6): The network device is disallowed to send, to the first terminal device in the RMTC window on the first carrier, a downlink signal that is not QCL-ed with the RSSI measurement resource. In other words, the rule (6) may be described as that the network device is allowed to send, to the first terminal device in the RMTC window on the first carrier, a downlink signal that is QCL-ed with the RSSI measurement resource.

In other words, the transmission resource that can be used for a downlink signal to the first terminal device may include the RMTC window on the first carrier, and the downlink signal is QCL-ed with the RSSI measurement resource.

Optionally, whether the transmission resource that can be used for a downlink signal to the first terminal device finally includes the first time-domain symbol group on the first carrier may be determined based on a capability of the terminal device. For details, refer to related descriptions in step S405. The details are not described herein again.

According to the rule (6), the network device can send, to the first terminal device in the RMTC window on the first carrier, a downlink signal that is QCL-ed with the RSSI measurement resource. When the downlink signal and the RSSI measurement resource are QCL-ed, the first terminal device may use a same beam to perform RSSI/CO measurement and downlink receiving, that is, the first terminal device may perform downlink receiving while performing RSSI/CO measurement, so that resources are fully utilized, thereby improving resource utilization and a network throughput.

It should be noted that the rule (5) and the rule (6) may be used independently, in other words, there is no dependency relationship between the rule (5) and the rule (6). Certainly, the rule (5) and the rule (6) may also be used in combination. For example, the scheduling rule may include both the rule (5) and the rule (6).

Optionally, the rule (5) and the rule (6) are also applicable to a time-domain symbol that is on another carrier in a same frequency band as the first carrier and that fully or partially overlaps a restricted time-domain symbol. A restricted time-domain symbol in the rule (5) may be a time-domain symbol in the fifth time-domain symbol group. A restricted time-domain symbol in the rule (6) may be a time-domain symbol in the RMTC window. In other words, the scheduling rule may further include a rule (7) and/or a rule (8) in the following.

The rule (7) includes: The network device is disallowed to send a downlink signal to the first terminal device on a sixth time-domain symbol group on a second carrier, in other words, the network device does not send a downlink signal to the first terminal device on the sixth time-domain symbol group on the second carrier. For the second carrier, refer to related descriptions in the rule (3). Details are not described herein again.

Optionally, a time-domain symbol in the sixth time-domain symbol group partially or fully overlaps time-domain symbols in the fifth time-domain symbol group. For example, each time-domain symbol in the sixth time-domain symbol group may partially or fully overlap with at least one time-domain symbol in the fifth time-domain symbol group.

For example, as shown in FIG. 13, the first carrier is a carrier 1, and the second carrier is a carrier 2. It is assumed that the RMTC window on the carrier 1 includes time-domain symbols whose indexes are 10 to 19, and the fifth time-domain symbol group includes time-domain symbols whose indexes are 9 and 20. In this case, the sixth time-domain symbol group on the carrier 2 includes time-domain symbols whose indexes are 9, 10, 20, and 21 on the carrier 2. The rule (8) includes: The network device is disallowed to send, to the first terminal device on a seventh time-domain symbol group on the second carrier, a downlink signal that is not QCL-ed with the RSSI measurement resource. In other words, the rule (8) may be described as that the network device is allowed to send, to the first terminal device on the seventh time-domain symbol group on the second carrier, a downlink signal that is QCL-ed with the RSSI measurement resource.

In other words, the transmission resource that can be used for a downlink signal to the first terminal device may include the seventh time-domain symbol group on the second carrier, and the downlink signal is QCL-ed with the RSSI measurement resource.

Optionally, a time-domain symbol in the seventh time-domain symbol group partially or fully overlaps time-domain symbols in the RMTC window. For example, a time-domain location of the seventh time-domain symbol group includes a time-domain location in time-domain locations of the RMTC window other than a time-domain location of the sixth time-domain symbol group. The time-domain location may be an absolute time-domain location.

For example, based on the example shown in FIG. 13, the seventh time-domain symbol group may include time-domain symbols whose indexes are 11 to 19 on the carrier 2.

Optionally, whether the transmission resource that can be used for a downlink signal to the first terminal device finally includes the seventh time-domain symbol group on the second carrier may be determined based on a capability of the terminal device. For details, refer to related descriptions in step S405. The details are not described herein again.

It should be noted that there is no strict execution sequence between step S904 and step S902. Step S902 may be performed before step S904, or step S904 may be performed before step S902, or step S902 and step S904 may be simultaneously performed. This is not specifically limited in this application.

Optionally, after step S904, the method provided in this embodiment of this application may further include step S905.

S905: The network device sends a downlink signal to the first terminal device on a second resource. Correspondingly, the first terminal device receives, on the second resource, the downlink signal from the network device.

The second resource is a part of or the entire transmission resource that can be used for a downlink signal to the first terminal device. When the second resource includes the time-domain symbols in the RMTC window on the first carrier and/or the seventh time-domain symbol group on the second carrier, the second resource (or the downlink signal) and the RSSI measurement resource are QCL-ed.

Based on the foregoing solution, the network device does not send a downlink signal on a time-domain symbol on which beam switching is performed, so that a downlink transmission failure caused by beam switching performed by the terminal device can be avoided, thereby reducing the waste of resources.

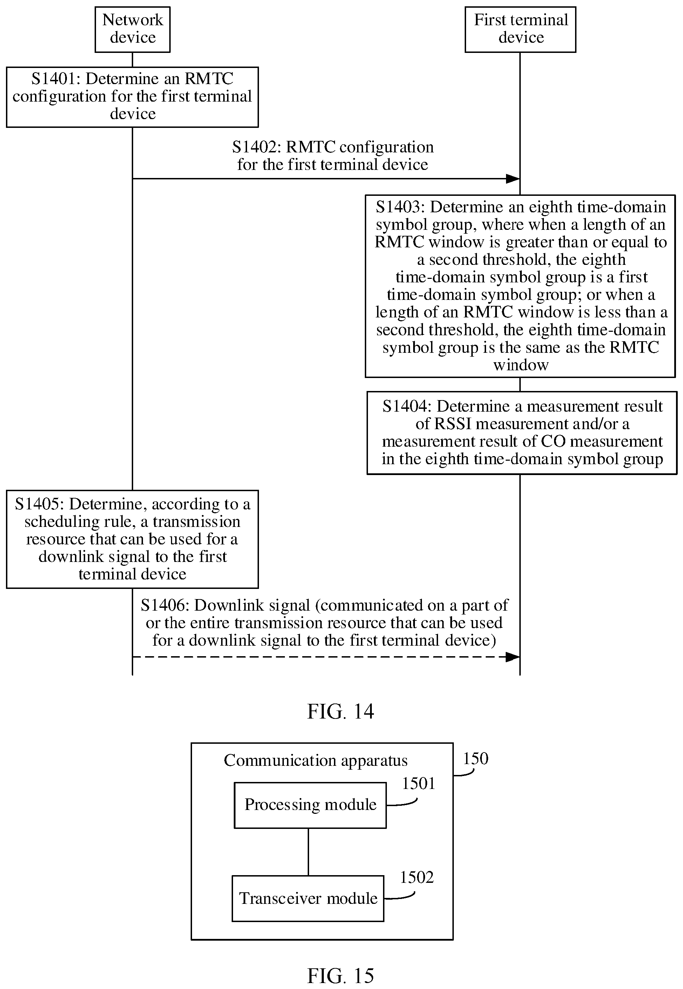

The method shown in FIG. 4 and the method shown in FIG. 9 are respectively applicable to a scenario in which the terminal device performs beam switching in the RMTC window and a scenario in which the terminal device performs beam switching outside the RMTC window. The two methods may be used separately or may be used in combination. FIG. 14 shows an example of a combined method according to this application. The method may include the following steps.

Steps S1401 and S1402 are the same as steps S401 and S402. For details, refer to related descriptions of steps S401 and S402. The details are not described herein again.

S1403: A first terminal device determines an eighth time-domain symbol group.

If a length of an RMTC window is greater than or equal to a second threshold, the eighth time-domain symbol group includes a time-domain symbol in the RMTC window other than a ninth time-domain symbol group. The ninth time-domain symbol group includes first N time-domain symbols and/or last M time-domain symbols in the RMTC window, and N and M are positive integers. In other words, when the length of the RMTC window is greater than or equal to the second threshold, the eighth time-domain symbol group may be the first time-domain symbol group, and the ninth time-domain symbol group may be the second time-domain symbol group, and in this case, the terminal device may perform related steps of the first terminal device in the method shown in FIG. 4, that is, the terminal device may perform beam switching in the RMTC window. For details, refer to related descriptions in the method shown in FIG. 4. The details are not described herein again.

If a length of the RMTC window is less than a second threshold, the eighth time-domain symbol group includes all time-domain symbols in the RMTC window. In other words, when the length of the RMTC window is less than the second threshold, the terminal device may perform related steps of the first terminal device in the method shown in FIG. 9, that is, the terminal device may perform beam switching outside the RMTC window. For details, refer to related descriptions in the method shown in FIG. 9

Optionally, the length of the RMTC window may be a total quantity of time-domain symbols in the RMTC window, or may be duration occupied by the RMTC window.

S1404: The first terminal device determines a measurement result of the RSSI measurement and/or a measurement result of the CO measurement in the eighth time-domain symbol group.

S1405: A network device determines, according to a scheduling rule, a transmission resource that can be used for a downlink signal to the first terminal device.

The scheduling rule includes: disallowing the network device to send a downlink signal to the first terminal device on a tenth time-domain symbol group on a first carrier.

If the length of the RMTC window is greater than or equal to the second threshold, the tenth time-domain symbol group includes the first N time-domain symbols and/or the last M time-domain symbols in the RMTC window, and N and M are positive integers. In other words, when the length of the RMTC window is greater than or equal to the second threshold, the tenth time-domain symbol group may be the second time-domain symbol group, and the network device may perform related steps of the network device in the method shown in FIG. 4. The scheduling rule includes at least one of the rule (1) to rule (4). For details, refer to related descriptions in the method shown in FIG. 4. The details are not described herein again.

If the length of the RMTC window is less than the second threshold, the tenth time-domain symbol group includes X time-domain symbols before the RMTC window and/or Y time-domain symbols after the RMTC window, and X and Y are positive integers. In other words, when the length of the RMTC window is less than the second threshold, the tenth time-domain symbol group may be the fifth time-domain symbol group, and the network device may perform related steps of the network device in the method shown in FIG. 9. The scheduling rule includes at least one of the rule (5) to rule (8). For details, refer to related descriptions in the method shown in FIG. 9. The details are not described herein again.

Optionally, after step S1405, the method provided in this embodiment of this application may further include step S1406.

S1406: The network device sends a downlink signal to the first terminal device on a third resource. Correspondingly, the first terminal device receives, on the third resource, the downlink signal from the network device.

Optionally, when the network device and the first terminal device perform related steps in the method shown in FIG. 4, the third resource may be the same as the first resource. When the network device and the first terminal device perform related steps in the method shown in FIG. 9, the third resource may be the same as the second resource. For details, refer to the related descriptions. The details are not described herein again.

Based on this solution, the terminal device may choose, based on the length of the RMTC window, to perform beam switching in the RMTC window or outside the RMTC window. When the length of the RMTC window is long, beam switching is performed in the RMTC window, so that downlink transmission can be performed before and after the RMTC window, to improve resource utilization and a network throughput. When the length of the RMTC window is short, beam switching is performed outside the RMTC window, to reduce impact of beam switching on RSSI/CO measurement, and improve accuracy of the measurement result.

It may be understood that, in the foregoing embodiments, the methods and/or the steps implemented by the network device may be implemented by a component (for example, a processor, a chip, a chip system, a circuit, a logical module, or software such as a chip or a circuit) that can be used in the network device; or the methods and/or the steps implemented by the terminal device may be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the first terminal device in the foregoing method embodiments, or an apparatus including the first terminal device, or a component that can be used in the first terminal device, for example, a chip or a chip system. Alternatively, the communication apparatus may be the network device in the foregoing method embodiments, or an apparatus including the network device, or a component that can be used in the network device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

**In** embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 15 is a diagram of a structure of a communication apparatus 150. The communication apparatus 150 includes a processing module 1501 and a transceiver module 1502. The communication apparatus 150 may be configured to implement a function of the network device or the first terminal device.

In some embodiments, the communication apparatus 150 may further include a storage module (not shown in FIG. 15), configured to store program instructions and data.

In some embodiments, the transceiver module 1502 may also be referred to as a transceiver unit, configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving steps and sending steps performed by the network device or the first terminal device in the foregoing method embodiments, and/or configured to support another process of the technology described in this specification. The processing module 1501 may be configured to perform processing (for example, determining and generating) steps performed by the network device or the first terminal device in the foregoing method embodiments, and/or configured to support another process of the technology described in this specification.

When the communication apparatus 150 is configured to implement a function of the first terminal device,
in a first possible implementation, the processing module 1501 is configured to determine a first time-domain symbol group. The processing module 1501 is further configured to determine a measurement result of RSSI measurement and/or a measurement result of channel occupancy CO measurement in the first time-domain symbol group. The first time-domain symbol group includes a time-domain symbol in an RMTC window other than a second time-domain symbol group. The second time-domain symbol group includes first N time-domain symbols and/or last M time-domain symbols in the RMTC window, and N and M are positive integers.

Optionally, if a first subcarrier spacing is greater than or equal to a first threshold, the second time-domain symbol group includes the first N time-domain symbols and/or the last M time-domain symbols in the RMTC window. The first subcarrier spacing is a subcarrier spacing of an active bandwidth part BWP of a first carrier, and the first carrier is a carrier on which measurement bandwidth of the RSSI measurement or the CO measurement is located; or the first subcarrier spacing is a subcarrier spacing of the RSSI measurement or the CO measurement.

Optionally, if an RSSI measurement resource and a first downlink signal are not QCL-ed, the second time-domain symbol group includes the first N time-domain symbols in the RMTC window, where the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or if the RSSI measurement resource and a second downlink signal are not QCL-ed, the second time-domain symbol group includes the last M time-domain symbols in the RMTC window, where the second downlink signal is a downlink signal on a 1^{st} time-domain symbol after the RMTC window, or the second downlink signal is a downlink signal that is after the RMTC window and that is closest to the RMTC window.

Optionally, the transceiver module 1502 is configured to send capability information to a network device. The capability information indicates whether the first terminal device supports simultaneously performing RSSI/CO measurement and downlink receiving when an RSSI measurement resource and a downlink signal are QCL-ed.

In a second possible implementation, the processing module 1501 is configured to determine capability information. The transceiver module 1502 is configured to send the capability information to a network device. The capability information indicates whether a first terminal device supports simultaneously performing RSSI/channel occupancy CO measurement and downlink receiving when a received signal strength indicator RSSI measurement resource and a downlink signal are QCL-ed.

Optionally, when the capability information indicates that the first terminal device does not support simultaneously performing RSSI/CO measurement and downlink receiving when an RSSI measurement resource and a downlink signal are QCL-ed, if the network device configures the first terminal device to receive the downlink signal while performing RSSI/CO measurement on the RSSI measurement resource, the processing module 1501 is further configured to determine to perform RSSI/CO measurement, and not to receive the downlink signal.

In a third possible implementation, the processing module 1501 is configured to determine an eighth time-domain symbol group. The processing module 1501 is further configured to determine a measurement result of received signal strength indicator RSSI measurement and/or a measurement result of channel occupancy CO measurement on the eighth time-domain symbol group. If a length of an RSSI measurement timing configuration RMTC window is greater than or equal to a second threshold, the eighth time-domain symbol group includes a time-domain symbol in the RMTC window other than a ninth time-domain symbol group, the ninth time-domain symbol group includes first N time-domain symbols and/or last M time-domain symbols in the RMTC window, and N and M are positive integers. Alternatively, if a length of the RMTC window is less than a second threshold, the eighth time-domain symbol group includes all time-domain symbols in the RMTC window.

Optionally, the length of the RMTC window is a total quantity of time-domain symbols in the RMTC window, or the length of the RMTC window is duration occupied by the RMTC window.

When the communication apparatus 150 is configured to implement a function of the network device,
in a first possible implementation, the processing module 1501 is configured to determine an RMTC configuration for a first terminal device, where the RMTC configuration is used for RSSI measurement and/or channel occupancy CO measurement; and the processing module 1501 is further configured to determine, according to a scheduling rule, a transmission resource that can be used for a downlink signal to the first terminal device. The scheduling rule includes: disallowing the network device to send a downlink signal to the first terminal device on a second time-domain symbol group on a first carrier. The first carrier is a carrier on which measurement bandwidth of the RSSI measurement and/or measurement bandwidth of the CO measurement are/is located; and the second time-domain symbol group includes first N time-domain symbols and/or last M time-domain symbols in an RMTC window of the first terminal device, and N and M are positive integers.

Optionally, if a first subcarrier spacing is greater than or equal to a first threshold, the second time-domain symbol group includes the first N time-domain symbols and/or the last M time-domain symbols in the RMTC window. The first subcarrier spacing is a subcarrier spacing of an active bandwidth part BWP of the first carrier, or the first subcarrier spacing is a subcarrier spacing of the RSSI measurement or the CO measurement.

Optionally, if an RSSI measurement resource and a first downlink signal are not QCL-ed, the second time-domain symbol group includes the first N time-domain symbols in the RMTC window, where the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or if the RSSI measurement resource and a second downlink signal are not QCL-ed, the second time-domain symbol group includes the last M time-domain symbols in the RMTC window, where the second downlink signal is a downlink signal on a 1^{st} time-domain symbol after the RMTC window, or the second downlink signal is a downlink signal that is after the RMTC window and that is closest to the RMTC window.

Optionally, the scheduling rule further includes: disallowing the network device to send, to the first terminal device on a first time-domain symbol group on the first carrier, a downlink signal that is not QCL-ed with the RSSI measurement resource. The first time-domain symbol group includes a time-domain symbol in the RMTC window other than the second time-domain symbol group.

Optionally, the scheduling rule further includes: allowing the network device to send, to the first terminal device on the first time-domain symbol group on the first carrier, a downlink signal that is QCL-ed with the RSSI measurement resource. The first time-domain symbol group includes a time-domain symbol in the RMTC window other than the second time-domain symbol group.

Optionally, the scheduling rule further includes: disallowing the network device to send a downlink signal to the first terminal device on a third time-domain symbol group on a second carrier. The second carrier and the first carrier are in a same frequency band, and a time-domain symbol in the third time-domain symbol group partially or fully overlaps time-domain symbols in the second time-domain symbol group.

Optionally, the scheduling rule further includes: disallowing the network device to send, to the first terminal device on a fourth time-domain symbol group on the second carrier, a downlink signal that is not QCL-ed with the RSSI measurement resource. A time-domain location of the fourth time-domain symbol group includes a time-domain location in time-domain locations of the RMTC window other than a time-domain location of the third time-domain symbol group.

Optionally, the scheduling rule further includes: allowing the network device to send, to the first terminal device on a fourth time-domain symbol group on the second carrier, a downlink signal that is QCL-ed with the RSSI measurement resource. A time-domain location of the fourth time-domain symbol group includes a time-domain location in time-domain locations of the RMTC window other than a time-domain location of the third time-domain symbol group.

Optionally, the transceiver module 1502 is configured to receive capability information from the first terminal device. The capability information indicates whether the first terminal device supports simultaneously performing RSSI/CO measurement and downlink receiving when an RSSI measurement resource and a downlink signal are QCL-ed.

In a second possible implementation, the processing module 1501 is configured to determine an RMTC configuration for a first terminal device, where the RMTC configuration is used for RSSI measurement and/or channel occupancy CO measurement; and the processing module 1501 is further configured to determine, according to a scheduling rule, a transmission resource that can be used for a downlink signal to the first terminal device. The scheduling rule includes: disallowing the network device to send, to the first terminal device on a first time-domain symbol group on the first carrier, a downlink signal that is not QCL-ed with the RSSI measurement resource. The first time-domain symbol group includes a time-domain symbol in the RMTC window other than the second time-domain symbol group. The second time-domain symbol group includes first N time-domain symbols and/or last M time-domain symbols in the RMTC window of the first terminal device, and N and M are positive integers.

In a third possible implementation, the processing module 1501 is configured to determine an RMTC configuration for a first terminal device, where the RMTC configuration is used for RSSI measurement and/or channel occupancy CO measurement; and the processing module 1501 is further configured to determine, according to a scheduling rule, a transmission resource that can be used for a downlink signal to the first terminal device, where the scheduling rule includes: disallowing a network device to send a downlink signal to the first terminal device on a fifth time-domain symbol group on a first carrier. The first carrier is a carrier on which measurement bandwidth of the RSSI measurement and/or measurement bandwidth of the CO measurement are/is located; and the fifth time-domain symbol group includes X time-domain symbols before an RMTC window of the first terminal device and/or Y time-domain symbols after the RMTC window, and X and Y are positive integers.

Optionally, if a first subcarrier spacing is greater than or equal to a first threshold, the fifth time-domain symbol group includes the X time-domain symbols before the RMTC window and/or the Y time-domain symbols after the RMTC window. The first subcarrier spacing is a subcarrier spacing of an active bandwidth part BWP of the first carrier, or the first subcarrier spacing is a subcarrier spacing of the RSSI measurement or the CO measurement.

Optionally, if an RSSI measurement resource and a third downlink signal are not QCL-ed, the fifth time-domain symbol group includes X time-domain symbols before the RMTC window, where the third downlink signal is a downlink signal on the X time-domain symbols, or the third downlink signal is a downlink signal that is before the X time-domain symbols and that is closest to the X time-domain symbols; and the RSSI measurement resource is used for the RSSI measurement or the CO measurement; and if the RSSI measurement resource and a fourth downlink signal are not QCL-ed, the fifth time-domain symbol group includes Y time-domain symbols after the RMTC window, where the fourth downlink signal is a downlink signal on the Y time-domain symbols, or the fourth downlink signal is a downlink signal that is after the Y time-domain symbols and that is closest to the Y time-domain symbols.

Optionally, the scheduling rule further includes: disallowing the network device to send, to the first terminal device in the RMTC window on the first carrier, a downlink signal that is not QCL-ed with the RSSI measurement resource.

Optionally, the scheduling rule further includes: allowing the network device to send, to the first terminal device in the RMTC window on the first carrier, a downlink signal that is QCL-ed with the RSSI measurement resource.

Optionally, the scheduling rule further includes: disallowing the network device to send a downlink signal to the first terminal device on a sixth time-domain symbol group on a second carrier. The second carrier and the first carrier are in a same frequency band, and a time-domain symbol in the sixth time-domain symbol group partially or fully overlaps time-domain symbols in the fifth time-domain symbol group.

Optionally, the scheduling rule further includes: disallowing the network device to send, to the first terminal device on a seventh time-domain symbol group on the second carrier, a downlink signal that is not QCL-ed with the RSSI measurement resource. A time-domain location of the seventh time-domain symbol group includes a time-domain location in a time-domain location of the RMTC window other than a time-domain location of the sixth time-domain symbol group.

Optionally, the scheduling rule further includes: allowing the network device to send, to the first terminal device on a seventh time-domain symbol group on the second carrier, a downlink signal that is QCL-ed with the RSSI measurement resource. A time-domain location of the seventh time-domain symbol group includes a time-domain location in a time-domain location of the RMTC window other than a time-domain location of the sixth time-domain symbol group.

Optionally, the transceiver module 1502 is configured to receive capability information from the first terminal device. The capability information indicates whether the first terminal device supports simultaneously performing RSSI/CO measurement and downlink receiving when an RSSI measurement resource and a downlink signal are QCL-ed.

In a fourth possible implementation, the processing module 1501 is configured to determine an RMTC configuration for a first terminal device, where the RMTC configuration is used for RSSI measurement and/or channel occupancy CO measurement; and the processing module 1501 is further configured to determine, according to a scheduling rule, a transmission resource that can be used for a downlink signal to the first terminal device, where the scheduling rule includes: disallowing the network device to send, to the first terminal device in an RMTC window on a first carrier, a downlink signal that is not QCL-ed with an RSSI measurement resource. The first carrier is a carrier on which measurement bandwidth of RSSI measurement and/or measurement bandwidth of CO measurement are/is located.

In a fifth possible implementation, the transceiver module 1502 is configured to receive capability information from the first terminal device. The processing module 1501 is configured to determine, based on the capability information, a transmission resource that can be used for a downlink signal to the first terminal device. The capability information indicates whether a first terminal device supports simultaneously performing RSSI/channel occupancy CO measurement and downlink receiving when a received signal strength indicator RSSI measurement resource and a downlink signal are QCL-ed.

Optionally, if the capability information indicates that the first terminal device does not support simultaneously performing RSSI/CO measurement and downlink receiving when an RSSI measurement resource and a downlink signal are QCL-ed, the transmission resource that can be used for a downlink signal to the first terminal device does not include an RMTC window on a first carrier.

In a sixth possible implementation, the processing module 1501 is configured to determine an RMTC configuration for a first terminal device, where the RMTC configuration is used for RSSI measurement and/or channel occupancy CO measurement; and the processing module 1501 is further configured to determine, according to a scheduling rule, a transmission resource that can be used for a downlink signal to the first terminal device. The scheduling rule includes: disallowing the network device to send a downlink signal to the first terminal device on a tenth time-domain symbol group on a first carrier.

If a length of an RMTC window is greater than or equal to a second threshold, the tenth time-domain symbol group includes first N time-domain symbols and/or last M time-domain symbols in the RMTC window, and N and M are positive integers. Alternatively, if a length of an RMTC window is less than a second threshold, the tenth time-domain symbol group includes X time-domain symbols before the RMTC window and/or Y time-domain symbols after the RMTC window, and X and Y are positive integers.

Optionally, the length of the RMTC window is a total quantity of time-domain symbols in the RMTC window, or the length of the RMTC window is duration occupied by the RMTC window.

All related content of the steps in the foregoing method embodiments may be cited in function descriptions of the corresponding functional modules. Details are not described herein again.

In this application, the communication apparatus 150 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 150 in FIG. 15 is a chip or a chip system, a function/implementation process of the transceiver module 1502 may be implemented by using an input/output interface (or a communication interface) of the chip or the chip system, and a function/implementation process of the processing module 1501 may be implemented by using a processor (or a processing circuit) of the chip or the chip system.

The communication apparatus 150 provided in this embodiment may perform the foregoing method. Therefore, for technical effects that can be achieved by the communication apparatus 150, refer to the foregoing method embodiments. Details are not described herein again.

In a possible product form, the network device or the terminal device in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuitry, or any combination of circuits capable of performing various functions described throughout this application.

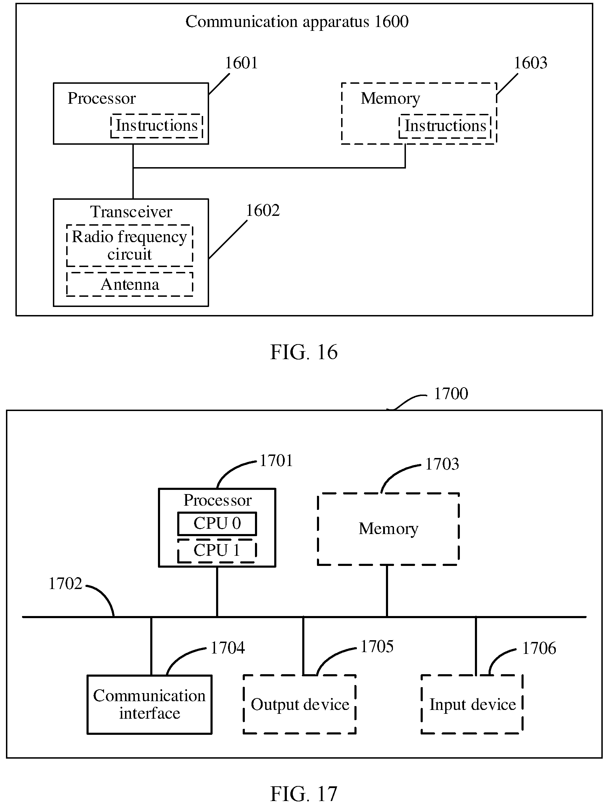

In another possible product form, the network device or the first terminal device in embodiments of this application may be implemented in a general bus architecture. For ease of description, refer to FIG. 16. FIG. 16 is a diagram of a structure of a communication apparatus 1600 according to an embodiment of this application. The communication apparatus 1600 includes a processor 1601 and a transceiver 1602. The communication apparatus 1600 may be a first terminal device, or a chip or a chip system in the first terminal device. Alternatively, the communication apparatus 1600 may be a network device, or a chip or a module in the network device. FIG. 16 shows only main components of the communication apparatus 1600. In addition to the processor 1601 and the transceiver 1602, the communication apparatus may further include a memory 1603 and an input/output apparatus (not shown in the figure).

Optionally, the processor 1601 is mainly configured to: process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1601, the transceiver 1602, and the memory 1603 may be connected through a communication bus.

After the communication apparatus is powered on, the processor 1601 may read the software program from the memory 1603, interpret and execute instructions of the software program, and process the data of the software program. When data needs to be sent wirelessly, the processor 1601 performs baseband processing on the to-be-sent data, and then outputs a baseband signal to the radio frequency circuit. The radio frequency circuit performs radio frequency processing on the baseband signal, and then sends, via the antenna, a radio frequency signal in the form of electromagnetic waves. When data is sent to the communication apparatus, the radio frequency circuit receives the radio frequency signal via the antenna, converts the radio frequency signal into a baseband signal, and outputs the baseband signal to the processor 1601. The processor 1601 converts the baseband signal into data for processing.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 150 may be in a form of the communication apparatus 1600 shown in FIG. 16.

In an example, functions/implementation processes of the processing module 1501 in FIG. 15 may be implemented by the processor 1601 in the communication apparatus 1600 shown in FIG. 16 by invoking the computer-executable instructions stored in the memory 1603. Functions/implementation processes of the transceiver module 1502 in FIG. 15 may be implemented by the transceiver 1602 in the communication apparatus 1600 shown in FIG. 16.

In still another possible product form, the network device or the first terminal device in this application may use a composition structure shown in FIG. 17, or include components shown in FIG. 17. FIG. 17 is a diagram of composition of a communication apparatus 1700 according to this application. The communication apparatus 1700 may be a first terminal device, or a chip or a system on chip in the first terminal device, or may be a network device, or a module, a chip, or a system on chip in the network device.

As shown in FIG. 17, the communication apparatus 1700 includes at least one processor 1701 and at least one communication interface (in FIG. 17, only an example in which one communication interface 1704 and one processor 1701 are included is used for description). Optionally, the communication apparatus 1700 may further include a communication bus 1702 and a memory 1703.

The processor 1701 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1701 may be another apparatus having a processing function, for example, a circuit, a component, or a software module. This is not limited.

The communication bus 1702 is configured to connect different components in the communication apparatus 1700, so that the different components can communicate with each other. The communication bus 1702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 17, but this does not mean that there is only one bus or only one type of bus.

The communication interface 1704 is configured to communicate with another device or a communication network. For example, the communication interface 1704 may be a module, a circuit, a transceiver, or any apparatus that can implement communication. Optionally, the communication interface 1704 may alternatively be an input/output interface located in the processor 1701, and is configured to implement signal input and signal output of the processor.

The memory 1703 may be an apparatus having a storage function, and is configured to store instructions and/or data. The instructions may be a computer program.

For example, the memory 1703 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1703 may be independent of the processor 1701, or may be integrated with the processor 1701. The memory 1703 may be located inside the communication apparatus 1700, or may be located outside the communication apparatus 1700. This is not limited. The processor 1701 may be configured to execute the instructions stored in the memory 1703, to implement a method provided in the following embodiments of this application.

In an optional implementation, the communication apparatus 1700 may further include an output device 1705 and an input device 1706. The output device 1705 communicates with the processor 1701, and may display information in a plurality of manners. For example, the output device 1705 may be a liquid crystal display (liquid crystal display, LCD), a light emitting diode (light emitting diode, LED) display device, a cathode ray tube (cathode ray tube, CRT) display device, a projector (projector), or the like. The input device 1706 communicates with the processor 1701, and may receive a user input in a plurality of manners. For example, the input device 1706 may be a mouse, a keyboard, a touchscreen device, or a sensor device.

In some embodiments, in hardware implementation, a person skilled in the art may figure out that the communication apparatus 150 may be in a form of the communication apparatus 1700 shown in FIG. 17.

In an example, functions/implementation processes of the processing module 1501 in FIG. 15 may be implemented by the processor 1701 in the communication apparatus 1700 shown in FIG. 17 by invoking the computer-executable instructions stored in the memory 1703. Functions/implementation processes of the transceiver module 1502 in FIG. 15 may be implemented by the communication interface 1704 in the communication apparatus 1700 shown in FIG. 17.

It should be noted that the structure shown in FIG. 17 does not constitute a specific limitation on the network device or the first terminal device. For example, in some other embodiments of this application, the network device or the first terminal device may include more or fewer components than those shown in the figure, combine some components, or split some components, or have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A measurement method, wherein the method comprises:
determining a first time-domain symbol group, wherein the first time-domain symbol group comprises a time-domain symbol in a received signal strength indicator RSSI measurement timing configuration RMTC window other than a second time-domain symbol group, the second time-domain symbol group comprises first N time-domain symbols and/or last M time-domain symbols in the RMTC window, and N and M are positive integers; and
determining a measurement result of RSSI measurement and/or a measurement result of channel occupancy CO measurement in the first time-domain symbol group.

2. The method according to claim 1, wherein if a first subcarrier spacing is greater than or equal to a first threshold, the second time-domain symbol group comprises the first N time-domain symbols and/or the last M time-domain symbols in the RMTC window; and
the first subcarrier spacing is a subcarrier spacing of an active bandwidth part BWP of a first carrier, and the first carrier is a carrier on which measurement bandwidth of the RSSI measurement or the CO measurement is located; or
the first subcarrier spacing is a subcarrier spacing of the RSSI measurement or the CO measurement.

3. The method according to claim 2, wherein the first subcarrier spacing is 480 kilohertz kHz or 960 kHz.

4. The method according to claim 1, wherein if an RSSI measurement resource and a first downlink signal are not quasi co-located QCL-ed, the second time-domain symbol group comprises the first N time-domain symbols in the RMTC window, wherein the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or
if the RSSI measurement resource and a second downlink signal are not QCL-ed, the second time-domain symbol group comprises the last M time-domain symbols in the RMTC window, wherein the second downlink signal is a downlink signal on a 1^{st} time-domain symbol after the RMTC window, or the second downlink signal is a downlink signal that is after the RMTC window and that is closest to the RMTC window.

5. The method according to any one of claims 1 to 4, wherein the method further comprises:
sending capability information to a network device, wherein the capability information indicates whether a first terminal device supports simultaneously performing RSSI/CO measurement and downlink receiving when an RSSI measurement resource and a downlink signal are QCL-ed.

6. The method according to claim 4 or 5, wherein the method further comprises:
receiving an RMTC configuration from the network device, wherein the RMTC configuration is used for the RSSI measurement and/or the channel occupancy CO measurement; and
determining the RSSI measurement resource based on the RMTC configuration.

7. A scheduling method, wherein the method comprises:
determining a received signal strength indicator RSSI measurement timing configuration RMTC configuration for a first terminal device, wherein the RMTC configuration is used for RSSI measurement and/or channel occupancy CO measurement; and
determining, according to a scheduling rule, a transmission resource that can be used for a downlink signal to the first terminal device, wherein the scheduling rule comprises that a network device does not send a downlink signal to the first terminal device on a second time-domain symbol group on a first carrier, or the transmission resource that can be used for a downlink signal to the first terminal device does not comprise a second time-domain symbol group on a first carrier, wherein
the first carrier is a carrier on which measurement bandwidth of the RSSI measurement and/or measurement bandwidth of the CO measurement are/is located; and the second time-domain symbol group comprises first N time-domain symbols and/or last M time-domain symbols in an RMTC window of the first terminal device, and N and M are positive integers.

8. The method according to claim 7, wherein if a first subcarrier spacing is greater than or equal to a first threshold, the second time-domain symbol group comprises the first N time-domain symbols and/or the last M time-domain symbols in the RMTC window; and
the first subcarrier spacing is a subcarrier spacing of an active bandwidth part BWP of the first carrier, or the first subcarrier spacing is a subcarrier spacing of the RSSI measurement or the CO measurement.

9. The method according to claim 7, wherein if an RSSI measurement resource and a first downlink signal are not quasi co-located QCL-ed, the second time-domain symbol group comprises the first N time-domain symbols in the RMTC window, wherein the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or
if the RSSI measurement resource and a second downlink signal are not QCL-ed, the second time-domain symbol group comprises the last M time-domain symbols in the RMTC window, wherein the second downlink signal is a downlink signal on a 1^{st} time-domain symbol after the RMTC window, or the second downlink signal is a downlink signal that is after the RMTC window and that is closest to the RMTC window.

10. The method according to any one of claims 7 to 9, wherein the scheduling rule further comprises: disallowing the network device to send, to the first terminal device on a first time-domain symbol group on the first carrier, a downlink signal that is not QCL-ed with the RSSI measurement resource, or allowing a network to send, to the first terminal device on a first time-domain symbol group on the first carrier, a downlink signal that is QCL-ed with the RSSI measurement resource, wherein
the first time-domain symbol group comprises a time-domain symbol in the RMTC window other than the second time-domain symbol group.

11. The method according to any one of claims 7 to 10, wherein the scheduling rule further comprises: allowing the network device to send, to the first terminal device on the first time-domain symbol group on the first carrier, a downlink signal that is QCL-ed with the RSSI measurement resource, wherein
the first time-domain symbol group comprises a time-domain symbol in the RMTC window other than the second time-domain symbol group.

12. The method according to any one of claims 7 to 11, wherein the scheduling rule further comprises: disallowing the network device to send a downlink signal to the first terminal device on a third time-domain symbol group on a second carrier, wherein
the second carrier and the first carrier are in a same frequency band, and a time-domain symbol in the third time-domain symbol group partially or fully overlaps time-domain symbols in the second time-domain symbol group.

13. The method according to claim 12, wherein the scheduling rule further comprises: disallowing the network device to send, to the first terminal device on a fourth time-domain symbol group on the second carrier, a downlink signal that is not QCL-ed with the RSSI measurement resource, wherein
a time-domain location of the fourth time-domain symbol group comprises a time-domain location in a time-domain location of the RMTC window other than a time-domain location of the third time-domain symbol group.

14. The method according to claim 12, wherein the scheduling rule further comprises: allowing the network device to send, to the first terminal device on a fourth time-domain symbol group on the second carrier, a downlink signal that is QCL-ed with the RSSI measurement resource, wherein
a time-domain location of the fourth time-domain symbol group comprises a time-domain location in a time-domain location of the RMTC window other than a time-domain location of the third time-domain symbol group.

15. The method according to any one of claims 7 to 14, wherein the method further comprises:
receiving capability information from the first terminal device, wherein the capability information indicates whether the first terminal device supports simultaneously performing RSSI/CO measurement and downlink receiving when an RSSI measurement resource and a downlink signal are QCL-ed.

16. A scheduling method, wherein the method comprises:
determining a received signal strength indicator RSSI measurement timing configuration RMTC configuration for a first terminal device, wherein the RMTC configuration is used for RSSI measurement and/or channel occupancy CO measurement; and
determining, according to a scheduling rule, a transmission resource that can be used for a downlink signal to the first terminal device, wherein the scheduling rule comprises: disallowing a network device to send a downlink signal to the first terminal device on a fifth time-domain symbol group on a first carrier, wherein
the first carrier is a carrier on which measurement bandwidth of the RSSI measurement and/or measurement bandwidth of the CO measurement are/is located; and the fifth time-domain symbol group comprises X time-domain symbols before an RMTC window of the first terminal device and/or Y time-domain symbols after the RMTC window, and X and Y are positive integers.

17. The method according to claim 16, wherein if a first subcarrier spacing is greater than or equal to a first threshold, the fifth time-domain symbol group comprises the X time-domain symbols before the RMTC window and/or the Y time-domain symbols after the RMTC window; and
the first subcarrier spacing is a subcarrier spacing of an active bandwidth part BWP of the first carrier, or the first subcarrier spacing is a subcarrier spacing of the RSSI measurement or the CO measurement.

18. The method according to claim 16, wherein if an RSSI measurement resource and a third downlink signal are not quasi co-located QCL-ed, the fifth time-domain symbol group comprises X time-domain symbols before the RMTC window, wherein the third downlink signal is a downlink signal on the X time-domain symbols, or the third downlink signal is a downlink signal that is before the X time-domain symbols and that is closest to the X time-domain symbols; and the RSSI measurement resource is used for the RSSI measurement or the CO measurement; and
if the RSSI measurement resource and a fourth downlink signal are not QCL-ed, the fifth time-domain symbol group comprises Y time-domain symbols after the RMTC window, wherein the fourth downlink signal is a downlink signal on the Y time-domain symbols, or the fourth downlink signal is a downlink signal that is after the Y time-domain symbols and that is closest to the Y time-domain symbols.

19. The method according to any one of claims 16 to 18, wherein the scheduling rule further comprises: disallowing the network device to send, to the first terminal device in the RMTC window on the first carrier, a downlink signal that is not QCL-ed with the RSSI measurement resource.

20. The method according to any one of claims 16 to 19, wherein the scheduling rule further comprises: allowing the network device to send, to the first terminal device in the RMTC window on the first carrier, a downlink signal that is QCL-ed with the RSSI measurement resource.

21. The method according to any one of claims 16 to 20, wherein the scheduling rule further comprises: disallowing the network device to send a downlink signal to the first terminal device on a sixth time-domain symbol group on a second carrier, wherein
the second carrier and the first carrier are in a same frequency band, and a time-domain symbol in the sixth time-domain symbol group partially or fully overlaps time-domain symbols in the fifth time-domain symbol group.

22. The method according to claim 21, wherein the scheduling rule further comprises: disallowing the network device to send, to the first terminal device on a seventh time-domain symbol group on the second carrier, a downlink signal that is not QCL-ed with the RSSI measurement resource, wherein
a time-domain location of the seventh time-domain symbol group comprises a time-domain location in a time-domain location of the RMTC window other than a time-domain location of the sixth time-domain symbol group.

23. The method according to claim 21, wherein the scheduling rule further comprises: allowing the network device to send, to the first terminal device on a seventh time-domain symbol group on the second carrier, a downlink signal that is QCL-ed with the RSSI measurement resource, wherein
a time-domain location of the seventh time-domain symbol group comprises a time-domain location in a time-domain location of the RMTC window other than a time-domain location of the sixth time-domain symbol group.

24. The method according to any one of claims 16 to 23, wherein the method further comprises:
receiving capability information from the first terminal device, wherein the capability information indicates whether the first terminal device supports simultaneously performing RSSI/CO measurement and downlink receiving when an RSSI measurement resource and a downlink signal are QCL-ed.

25. A communication method, wherein the method comprises:
determining capability information; and
sending the capability information to a network device, wherein the capability information indicates whether a first terminal device supports simultaneously performing RSSI/channel occupancy CO measurement and downlink receiving when a received signal strength indicator RSSI measurement resource and a downlink signal are quasi co-located QCL-ed.

26. The method according to claim 25, wherein the capability information indicates that the first terminal device does not support simultaneously performing RSSI/CO measurement and downlink receiving when an RSSI measurement resource and a downlink signal are QCL-ed; and the method further comprises:
when the network device configures the first terminal device to receive the downlink signal while performing RSSI/CO measurement on the RSSI measurement resource, performing, by the first terminal device, RSSI/CO measurement, and skipping receiving the downlink signal.

27. A communication method, wherein the method comprises:
receiving capability information from a first terminal device, wherein the capability information indicates whether the first terminal device supports simultaneously performing RSSI/channel occupancy CO measurement and downlink receiving when a received signal strength indicator RSSI measurement resource and a downlink signal are quasi co-located QCL-ed; and
determining, based on the capability information, a transmission resource that can be used for a downlink signal to the first terminal device.

28. The method according to claim 27, wherein if the capability information indicates that the first terminal device does not support simultaneously performing RSSI/CO measurement and downlink receiving when an RSSI measurement resource and a downlink signal are QCL-ed,
the transmission resource that can be used for a downlink signal to the first terminal device does not comprise an RMTC window on a first carrier.

29. A communication apparatus, wherein the apparatus comprises a processing module;
the processing module is configured to determine a first time-domain symbol group, wherein the first time-domain symbol group comprises a time-domain symbol in a received signal strength indicator RSSI measurement timing configuration RMTC window other than a second time-domain symbol group, the second time-domain symbol group comprises first N time-domain symbols and/or last M time-domain symbols in the RMTC window, and N and M are positive integers; and
the processing module is further configured to determine a measurement result of RSSI measurement and/or a measurement result of channel occupancy CO measurement in the first time-domain symbol group.

30. The apparatus according to claim 29, wherein if a first subcarrier spacing is greater than or equal to a first threshold, the second time-domain symbol group comprises the first N time-domain symbols and/or the last M time-domain symbols in the RMTC window; and
the first subcarrier spacing is a subcarrier spacing of an active bandwidth part BWP of a first carrier, and the first carrier is a carrier on which measurement bandwidth of the RSSI measurement or the CO measurement is located; or
the first subcarrier spacing is a subcarrier spacing of the RSSI measurement or the CO measurement.

31. The apparatus according to claim 30, wherein the first subcarrier spacing is 480 kilohertz kHz or 960 kHz.

32. The apparatus according to claim 29, wherein if an RSSI measurement resource and a first downlink signal are not quasi co-located QCL-ed, the second time-domain symbol group comprises the first N time-domain symbols in the RMTC window, wherein the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or
if the RSSI measurement resource and a second downlink signal are not QCL-ed, the second time-domain symbol group comprises the last M time-domain symbols in the RMTC window, wherein the second downlink signal is a downlink signal on a 1^{st} time-domain symbol after the RMTC window, or the second downlink signal is a downlink signal that is after the RMTC window and that is closest to the RMTC window.

33. The apparatus according to any one of claims 29 to 31, wherein the apparatus further comprises a transceiver module; and
the transceiver module is configured to send capability information to a network device, wherein the capability information indicates whether a first terminal device supports simultaneously performing RSSI/CO measurement and downlink receiving when an RSSI measurement resource and a downlink signal are QCL-ed.

34. The apparatus according to claim 32 or 33, wherein the apparatus further comprises a transceiver module;
the transceiver module is configured to receive an RMTC configuration from the network device, wherein the RMTC configuration is used for the RSSI measurement and/or the channel occupancy CO measurement; and
the processing module is further configured to determine the RSSI measurement resource based on the RMTC configuration.

35. A scheduling apparatus, wherein the apparatus comprises a processing module;
the processing module is configured to determine a received signal strength indicator RSSI measurement timing configuration RMTC configuration for a first terminal device, wherein the RMTC configuration is used for RSSI measurement and/or channel occupancy CO measurement; and
the processing module is further configured to determine, according to a scheduling rule, a transmission resource that can be used for a downlink signal to the first terminal device, wherein the scheduling rule comprises that a network device does not send a downlink signal to the first terminal device on a second time-domain symbol group on a first carrier, or the transmission resource that can be used for a downlink signal to the first terminal device does not comprise a second time-domain symbol group on a first carrier, wherein
the first carrier is a carrier on which measurement bandwidth of the RSSI measurement and/or measurement bandwidth of the CO measurement are/is located; and the second time-domain symbol group comprises first N time-domain symbols and/or last M time-domain symbols in an RMTC window of the first terminal device, and N and M are positive integers.

36. The apparatus according to claim 35, wherein if a first subcarrier spacing is greater than or equal to a first threshold, the second time-domain symbol group comprises the first N time-domain symbols and/or the last M time-domain symbols in the RMTC window; and
the first subcarrier spacing is a subcarrier spacing of an active bandwidth part BWP of the first carrier, or the first subcarrier spacing is a subcarrier spacing of the RSSI measurement or the CO measurement.

37. The apparatus according to claim 35, wherein if an RSSI measurement resource and a first downlink signal are not quasi co-located QCL-ed, the second time-domain symbol group comprises the first N time-domain symbols in the RMTC window, wherein the first downlink signal is a downlink signal on a 1^{st} time-domain symbol before the RMTC window, or the first downlink signal is a downlink signal that is before the RMTC window and that is closest to the RMTC window; and the RSSI measurement resource is used for the RSSI measurement or the CO measurement; and/or
if the RSSI measurement resource and a second downlink signal are not QCL-ed, the second time-domain symbol group comprises the last M time-domain symbols in the RMTC window, wherein the second downlink signal is a downlink signal on a 1^{st} time-domain symbol after the RMTC window, or the second downlink signal is a downlink signal that is after the RMTC window and that is closest to the RMTC window.

38. The apparatus according to any one of claims 35 to 37, wherein the scheduling rule further comprises: disallowing the network device to send, to the first terminal device on a first time-domain symbol group on the first carrier, a downlink signal that is not QCL-ed with the RSSI measurement resource, or allowing a network to send, to the first terminal device on a first time-domain symbol group on the first carrier, a downlink signal that is QCL-ed with the RSSI measurement resource, wherein
the first time-domain symbol group comprises a time-domain symbol in the RMTC window other than the second time-domain symbol group.

39. The apparatus according to any one of claims 35 to 38, wherein the scheduling rule further comprises: allowing the network device to send, to the first terminal device on the first time-domain symbol group on the first carrier, a downlink signal that is QCL-ed with the RSSI measurement resource, wherein
the first time-domain symbol group comprises a time-domain symbol in the RMTC window other than the second time-domain symbol group.

40. The apparatus according to any one of claims 35 to 39, wherein the scheduling rule further comprises: disallowing the network device to send a downlink signal to the first terminal device on a third time-domain symbol group on a second carrier, wherein
the second carrier and the first carrier are in a same frequency band, and a time-domain symbol in the third time-domain symbol group partially or fully overlaps time-domain symbols in the second time-domain symbol group.

41. The apparatus according to claim 40, wherein the scheduling rule further comprises: disallowing the network device to send, to the first terminal device on a fourth time-domain symbol group on the second carrier, a downlink signal that is not QCL-ed with the RSSI measurement resource, wherein
a time-domain location of the fourth time-domain symbol group comprises a time-domain location in a time-domain location of the RMTC window other than a time-domain location of the third time-domain symbol group.

42. The apparatus according to claim 40, wherein the scheduling rule further comprises: allowing the network device to send, to the first terminal device on a fourth time-domain symbol group on the second carrier, a downlink signal that is QCL-ed with the RSSI measurement resource, wherein
a time-domain location of the fourth time-domain symbol group comprises a time-domain location in a time-domain location of the RMTC window other than a time-domain location of the third time-domain symbol group.

43. The apparatus according to any one of claims 35 to 42, wherein the apparatus further comprises a transceiver module; and
the transceiver module is further configured to receive capability information from the first terminal device, wherein the capability information indicates whether the first terminal device supports simultaneously performing RSSI/CO measurement and downlink receiving when an RSSI measurement resource and a downlink signal are QCL-ed.

44. A scheduling apparatus, wherein the apparatus comprises a processing module;
the processing module is configured to determine a received signal strength indicator RSSI measurement timing configuration RMTC configuration for a first terminal device, wherein the RMTC configuration is used for RSSI measurement and/or channel occupancy CO measurement; and
the processing module is further configured to determine, according to a scheduling rule, a transmission resource that can be used for a downlink signal to the first terminal device, wherein the scheduling rule comprises: disallowing a network device to send a downlink signal to the first terminal device on a fifth time-domain symbol group on a first carrier, wherein
the first carrier is a carrier on which measurement bandwidth of the RSSI measurement and/or measurement bandwidth of the CO measurement are/is located; and the fifth time-domain symbol group comprises X time-domain symbols before an RMTC window of the first terminal device and/or Y time-domain symbols after the RMTC window, and X and Y are positive integers.

45. The apparatus according to claim 44, wherein if a first subcarrier spacing is greater than or equal to a first threshold, the fifth time-domain symbol group comprises the X time-domain symbols before the RMTC window and/or the Y time-domain symbols after the RMTC window; and
the first subcarrier spacing is a subcarrier spacing of an active bandwidth part BWP of the first carrier, or the first subcarrier spacing is a subcarrier spacing of the RSSI measurement or the CO measurement.

46. The apparatus according to claim 44, wherein if an RSSI measurement resource and a third downlink signal are not quasi co-located QCL-ed, the fifth time-domain symbol group comprises X time-domain symbols before the RMTC window, wherein the third downlink signal is a downlink signal on the X time-domain symbols, or the third downlink signal is a downlink signal that is before the X time-domain symbols and that is closest to the X time-domain symbols; and the RSSI measurement resource is used for the RSSI measurement or the CO measurement; and
if the RSSI measurement resource and a fourth downlink signal are not QCL-ed, the fifth time-domain symbol group comprises Y time-domain symbols after the RMTC window, wherein the fourth downlink signal is a downlink signal on the Y time-domain symbols, or the fourth downlink signal is a downlink signal that is after the Y time-domain symbols and that is closest to the Y time-domain symbols.

47. The apparatus according to any one of claims 44 to 46, wherein the scheduling rule further comprises: disallowing the network device to send, to the first terminal device in the RMTC window on the first carrier, a downlink signal that is not QCL-ed with the RSSI measurement resource.

48. The apparatus according to any one of claims 44 to 47, wherein the scheduling rule further comprises: allowing the network device to send, to the first terminal device in the RMTC window on the first carrier, a downlink signal that is QCL-ed with the RSSI measurement resource.

49. The apparatus according to any one of claims 44 to 48, wherein the scheduling rule further comprises: disallowing the network device to send a downlink signal to the first terminal device on a sixth time-domain symbol group on a second carrier, wherein
the second carrier and the first carrier are in a same frequency band, and a time-domain symbol in the sixth time-domain symbol group partially or fully overlaps time-domain symbols in the fifth time-domain symbol group.

50. The apparatus according to claim 49, wherein the scheduling rule further comprises: disallowing the network device to send, to the first terminal device on a seventh time-domain symbol group on the second carrier, a downlink signal that is not QCL-ed with the RSSI measurement resource, wherein
a time-domain location of the seventh time-domain symbol group comprises a time-domain location in a time-domain location of the RMTC window other than a time-domain location of the sixth time-domain symbol group.

51. The apparatus according to claim 49, wherein the scheduling rule further comprises: allowing the network device to send, to the first terminal device on a seventh time-domain symbol group on the second carrier, a downlink signal that is QCL-ed with the RSSI measurement resource, wherein
a time-domain location of the seventh time-domain symbol group comprises a time-domain location in a time-domain location of the RMTC window other than a time-domain location of the sixth time-domain symbol group.

52. The apparatus according to any one of claims 44 to 51, wherein the apparatus further comprises a transceiver module; and
the transceiver module is configured to receive capability information from the first terminal device, wherein the capability information indicates whether the first terminal device supports simultaneously performing RSSI/CO measurement and downlink receiving when an RSSI measurement resource and a downlink signal are QCL-ed.

53. A communication apparatus, wherein the apparatus comprises a processing module and a transceiver module;
the processing module is configured to determine capability information; and
the transceiver module is configured to send the capability information to a network device, wherein the capability information indicates whether a first terminal device supports simultaneously performing RSSI/channel occupancy CO measurement and downlink receiving when a received signal strength indicator RSSI measurement resource and a downlink signal are quasi co-located QCL-ed.

54. The apparatus according to claim 53, wherein the capability information indicates that the first terminal device does not support simultaneously performing RSSI/CO measurement and downlink receiving when an RSSI measurement resource and a downlink signal are QCL-ed; and the apparatus further comprises:
when the network device configures the first terminal device to receive the downlink signal while performing RSSI/CO measurement on the RSSI measurement resource, performing, by the first terminal device, RSSI/CO measurement, and skipping receiving the downlink signal.

55. A communication apparatus, wherein the apparatus comprises a processing module and a transceiver module;
the transceiver module is configured to receive capability information from a first terminal device, wherein the capability information indicates whether the first terminal device supports simultaneously performing RSSI/channel occupancy CO measurement and downlink receiving when a received signal strength indicator RSSI measurement resource and a downlink signal are quasi co-located QCL-ed; and
the processing module is configured to determine, based on the capability information, a transmission resource that can be used for a downlink signal to the first terminal device.

56. The apparatus according to claim 55, wherein if the capability information indicates that the first terminal device does not support simultaneously performing RSSI/CO measurement and downlink receiving when an RSSI measurement resource and a downlink signal are QCL-ed,
the transmission resource that can be used for a downlink signal to the first terminal device does not comprise an RMTC window on a first carrier.

57. A communication system, wherein the communication system comprises the communication apparatus according to any one of claims 29 to 34, 53, and 54, and the communication apparatus according to any one of claims 35 to 52, 55, and 56.

58. A communication apparatus, wherein the communication apparatus comprises a processor, and the processor is configured to run a computer program or instructions, to enable the communication apparatus to perform the method according to any one of claims 1 to 6, or enable the communication apparatus to perform the method according to claim 25 or 26.

59. A communication apparatus, wherein the communication apparatus comprises a processor, and the processor is configured to run a computer program or instructions, to enable the communication apparatus to perform the method according to any one of claims 7 to 24, or enable the communication apparatus to perform the method according to claim 27 or 28.

60. A computer-readable storage medium, wherein the computer-readable storage medium stores computer instructions or a computer program, and when the computer instructions or the computer program is run on a computer, the method according to any one of claims 1 to 6 is performed, or the method according to claim 25 or 26 is performed.

61. A computer-readable storage medium, wherein the computer-readable storage medium stores computer instructions or a computer program, and when the computer instructions or the computer program is run on a computer, the method according to any one of claims 7 to 24 is performed, or the method according to claim 27 or 28 is performed.

62. A computer program product, wherein the computer program product comprises computer instructions, and when a part or all of the computer instructions are run on a computer, the method according to any one of claims 1 to 6 is performed, or the method according to claim 25 or 26 is performed.

63. A computer program product, wherein the computer program product comprises computer instructions, and when a part or all of the computer instructions are run on a computer, the method according to any one of claims 7 to 24 is performed, or the method according to claim 27 or 28 is performed.

64. A chip, comprising a processor, wherein
the processor is coupled to a memory, the memory is configured to store a program or instructions, and when the program or the instructions are executed by the processor, the chip is enabled to perform the method according to any one of claims 1 to 6, or the chip is enabled to perform the method according to claim 25 or 26.

65. A chip, comprising a processor, wherein
the processor is coupled to a memory, the memory is configured to store a program or instructions, and when the program or the instructions are executed by the processor, the chip is enabled to perform the method according to any one of claims 7 to 24, or the chip is enabled to perform the method according to claim 27 or 28.
